(19) Europäisches Patentamt
European Patent Office
Office européen des brevets

(11) **EP 2 930 897 B1**

(12) **EUROPEAN PATENT SPECIFICATION**

(45) Date of publication and mention
of the grant of the patent:
**02.11.2016 Bulletin 2016/44**

(51) Int Cl.:
***H04L 27/233*** (2006.01)

(21) Application number: **15162376.6**

(22) Date of filing: **02.04.2015**

(54) **DIFFERENTIAL DEMODULATOR AND DIFFERENTIAL DEMODULATION METHOD**

DIFFERENTIELLE DEMODULATIONSVORRICHTUNG UND DIFFERENTIELLES DEMODULATIONSVERFAHREN

DÉMODULATEUR DIFFÉRENTIEL ET PROCÉDÉ DE DÉMODULATION DIFFÉRENTIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2014 JP 2014080870**

(43) Date of publication of application:
**14.10.2015 Bulletin 2015/42**

(73) Proprietor: **Mitsubishi Electric Corporation Chiyoda-ku
Tokyo 100-8310 (JP)**

(72) Inventor: **Imao, Masataka
Tokyo, 100-8310 (JP)**

(74) Representative: **Hoffmann Eitle
Patent- und Rechtsanwälte PartmbB
Arabellastraße 30
81925 München (DE)**

(56) References cited:
**EP-A1- 2 709 329**

- **IMAO MASATAKA ET AL: "Cross detection method and its improved effect in BER for DAB diversity receiver", 2013 IEEE INTERNATIONAL SYMPOSIUM ON BROADBAND MULTIMEDIA SYSTEMS AND BROADCASTING (BMSB), IEEE, 5 June 2013 (2013-06-05), pages 1-6, XP032495785, ISSN: 2155-5044, DOI: 10.1109/BMSB.2013.6621720 [retrieved on 2013-10-04]**

EP 2 930 897 B1

**Description**

BACKGROUND OF THE INVENTION

1. Field of the Invention

This invention relates to a differential demodulator and a method for demodulating a modulated signal that has been modulated by use of a differential phase shift modulation scheme.

2. Description of the Related Art

In wireless communication systems using digital phase modulation, there is a problem of degradation of the quality of the signal arriving at the receiver due to multipath fading by radio wave interference, severe fluctuations in the channel environment when the receiver moves, and other factors. Another problem is reduced reliability of the demodulated signal generated by the receiver when the noise power rivals the received signal power in weak field environments. When quadrature phase shift keying (QPSK) is used as a digital angle modulation format, for example, a demodulation method that compares the received signal with an absolute phase reference provided on the phase plane is generally used, so when there is a large amount of phase rotation of the received signal due to radio wave interference, receiver motion, and thermal noise, accurate demodulation becomes in principle impossible.

To mitigate the degradation of reception performance due to these problems, differential quadrature phase shift keying (DQPSK), in which a new modulated signal is generated from the phase differences of a QPSK signal, is in widespread use. When a DQPSK signal is received, a demodulated signal is generated from the signal received at a certain time and the signal received just before; a consequent advantage of the DQPSK format is that accurate demodulation is possible even in multipath fading environments in which all received signals undergo a fixed amount of phase rotation. Another advantage of the DQPSK format is that accurate demodulation, substantially independent of phase rotation, is possible even in mobile reception environments in which the amount of phase rotation varies over time, provided the rate of change in the amount of phase rotation is sufficiently small in comparison with the signal transmission rate. Yet another advantage of the DQPSK format is that the receiver can be simplified, because the DQPSK signal does not have to reproduce an absolute phase reference in the receiver.

Differential demodulation methods are generally used to demodulate a DQPSK signal. Receivers that employ differential demodulation methods refer to the (m + 1)-th received signal $R(m + 1)$ and the immediately preceding m-th received signal $R(m),$ and detect a phase difference $\Delta\Phi$ by use of, for example, the following equation (1)

$$\Delta\Phi \;=\; \angle\{R(m \,+\, 1)\,R^{*}(m)\} \qquad\qquad (1)$$

where $\angle\{\alpha\}$ denotes the argument of $\alpha,$ $\alpha^{*}$ denotes the complex conjugate of $\alpha,$ and m is an integer. A method of differential demodulation that uses this type of calculation is disclosed in, for example, Japanese patent application publication No. H9-233138 (paragraph 0049, Fig. 2).

When the received signals $R(m + 1)$ and R(m) are complex signals having amplitude and phase components, however, the calculation on the right side of equation (1) requires at least four multiplication or multiply-add operations, and a further calculation to obtain the phase from the result, leading to problems of increased amounts of circuitry and computation.

As a remedy, Japanese patent application publication No. 2004-364131 (paragraph 0008, Fig. 2) describes a method in which the phase plane is divided into regions, a phase reference is provided in each region, and the phase difference from the phase reference is calculated, thereby reducing the number of numerical tables or multipliers.

EP 2 709 329 (Fig. 1) also discloses a method for differential modulation.

SUMMARY OF THE INVENTION

The method described in Japanese patent application publication No. 2004-364131 can simplify the computational algorithm, but it is still necessary to obtain the demodulation result as a complex number in order to calculate the phase difference, so the amounts of circuitry and computation are inadequately reduced.

This problem is addressed in the present invention, the object of which is to provide a differential demodulator and a differential demodulation method that can reduce the amounts of circuitry and computation required for differential demodulation processing.

The invention is defined by the appended claims.

## BRIEF DESCRIPTION OF THE DRAWINGS

In the attached drawings:

FIG. 1 is a block diagram schematically showing the configuration of a differential demodulator according to a first embodiment of the invention;

FIG. 2 illustrates the operation of the region discrimination unit in the differential demodulator according to the first embodiment;

FIG. 3 illustrates the operation of the region discrimination unit in the differential demodulator according to the first embodiment;

FIG. 4 is a block diagram schematically showing an example of the configuration of the comparison unit in the differential demodulator according to the first embodiment;

FIG. 5 is a block diagram schematically showing another example of the configuration of the comparison unit in the differential demodulator according to the first embodiment;

FIG. 6 illustrates the operation of the switching unit in the differential demodulator according to the first embodiment;

FIGs. 7(a) and 7(b) illustrate the operation of the first decision unit in the differential demodulator according to the first embodiment;

FIG. 8 is a block diagram schematically showing the configuration of the multiply-add operation unit in the differential demodulator according to the first embodiment;

FIGs. 9(a) and 9(b) illustrate the operation of the second decision unit in the differential demodulator according to the first embodiment;

FIG. 10 illustrates the operation of the second decision unit in the differential demodulator according to the first embodiment;

FIGs. 11(a) and 11(b) illustrate the operation of the second decision unit in the differential demodulator according to the first embodiment;

FIG. 12 illustrates the operation of the second decision unit in the differential demodulator according to the first embodiment;

FIGs. 13(a) and 13(b) illustrate the operation of the second decision unit in the differential demodulator according to the first embodiment;

FIG. 14 illustrates the operation of the second decision unit in the differential demodulator according to the first embodiment;

FIG. 15 is a block diagram schematically showing the configuration of a differential demodulator according to a second embodiment of the invention;

FIG. 16 is a block diagram schematically showing the configuration of a differential demodulator according to a third embodiment of the invention;

FIG. 17 is a block diagram schematically showing the configuration of a differential demodulator according to a fourth embodiment of the invention; and

FIG. 18 is a block diagram schematically showing the configuration of a differential demodulator according to a fifth embodiment of the invention.

## DETAILED DESCRIPTION OF THE INVENTION

<1> First Embodiment

<1-1> Configuration of the First Embodiment

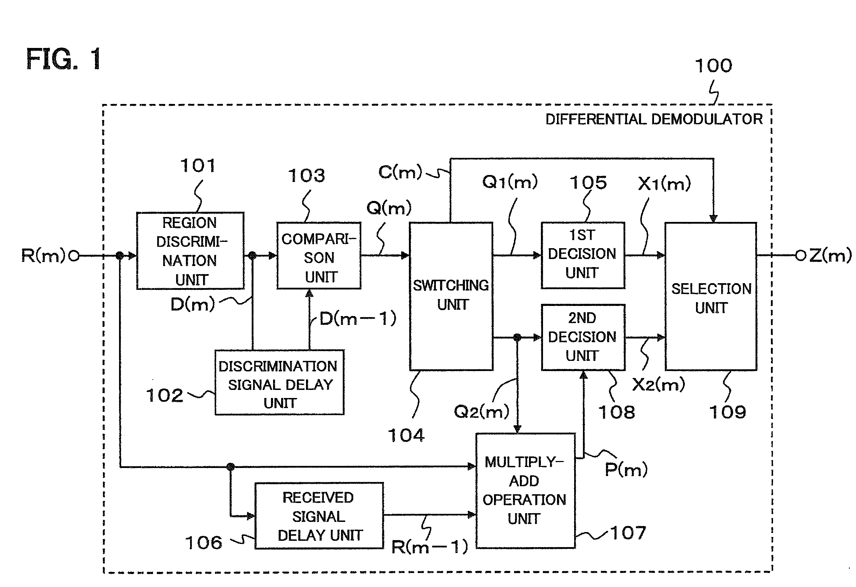

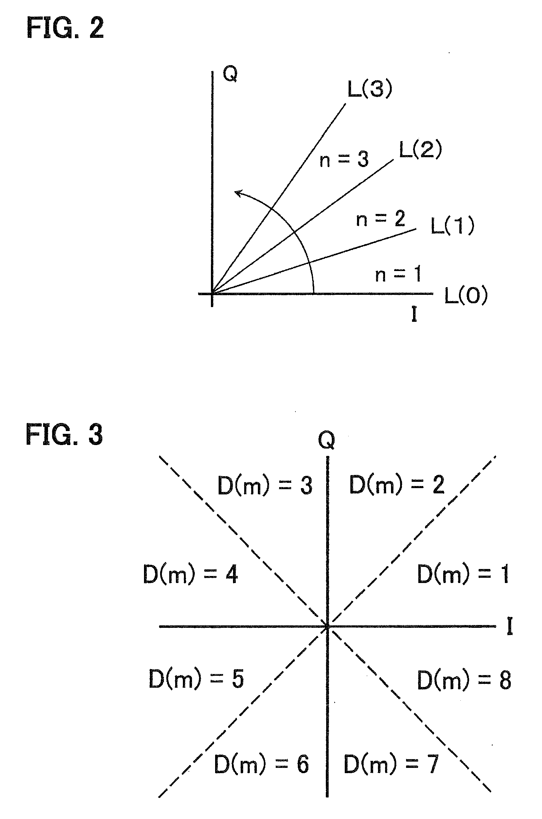

FIG. 1 is a block diagram schematically showing the configuration of a differential demodulator 100 according to a first embodiment of the invention. The differential demodulator 100 is a device capable of carrying out the differential demodulation method according to the first embodiment. As indicated in FIG. 1, the differential demodulator 100 generates a discrimination signal (D(m), described later in FIG. 3) corresponding to a phase plane region in which the received signal resides, and by switching the demodulation method according to the amount of temporal variation in this discrimination signal, picks out in advance a minimal computational procedure necessary for differential demodulation. In the differential demodulator 100 according to the first embodiment, the calculations necessary for differential demodulation can also be simplified by restricting the content of the multiply-add computations, and the amounts of circuitry and computation necessary for the differential demodulation process can be reduced. The differential demodulator 100 and differential demodulation method according to the first embodiment can be applied in a receiver that receives a modulated signal that has been modulated by use of a differential phase shift keying method.

The differential demodulator 100 in FIG. 1 receives a received signal R(m), which is a differential modulated signal, more specifically a modulated signal that has been modulated by use of the DQPSK (Differential Quadrature Phase Shift Keying) format, and outputs a differential demodulation result as a demodulated signal $Z(m)$. The received signal $R(m)$ and demodulated signal $Z(m)$ are both complex valued signals having amplitude and phase components, and $m$ is an integer. The DQPSK format (modulation multiplicity $N = 4$) is used as an exemplary differential phase shift keying method in the first embodiment, and a device and method for receiving a modulated signal modulated by this modulation method will be described.

As shown in FIG. 1, the differential demodulator 100 according to the first embodiment has a region discrimination unit 101, a discrimination signal delay unit 102, a comparison unit 103, a switching unit 104, a first decision unit 105, a received signal delay unit 106, a multiply-add operation unit 107, a second decision unit 108, and a selection unit 109.

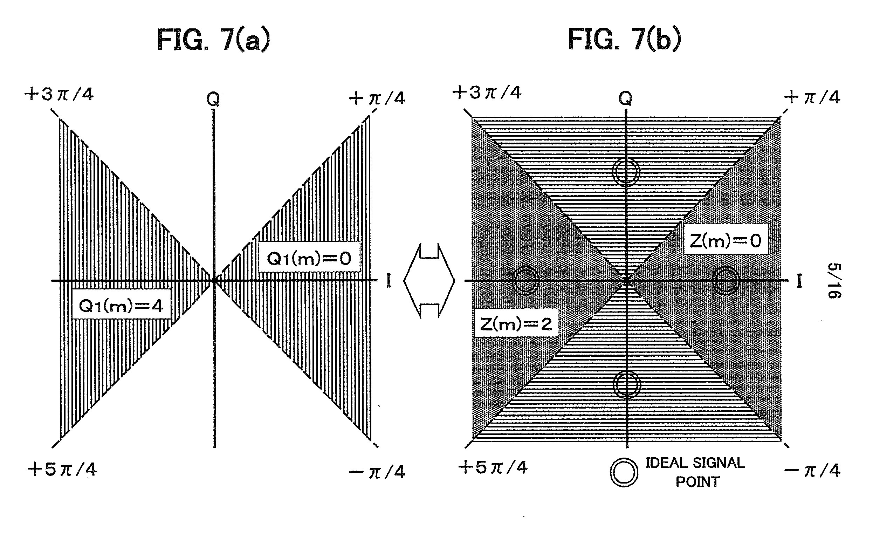

The received signal $R(m)$ input to the differential demodulator 100 is first input to the region discrimination unit 101. The region discrimination unit 101 selects a residence region (one of the vertically hatched regions in FIG. 7(a), 9(a), 11(a), or 13(a)), which is a phase region in which the received signal $R(m)$ resides in the phase plane (the IQ plane, as a complex number plane) from a plurality of phase regions into which the phase plane is divided according to the modulation multiplicity $N$ of the modulated signal, and outputs a value corresponding to the residence region as the discrimination signal $D(m)$. The plurality of phase regions are regions into which the phase plane is divided at equal phase intervals, and as the discrimination signal, values that increase counterclockwise from phase zero as a reference base are preferably assigned to each of the plurality of phase regions. The number of regions in the plurality of phase regions is preferably twice the modulation multiplicity $N$.

The discrimination signal delay unit 102 outputs, as a delayed discrimination signal $D(m - 1)$, a signal obtained by temporally delaying the discrimination signal $D(m)$ generated by the region discrimination unit 101.

The comparison unit 103 outputs a value corresponding to the difference between the discrimination signal $D(m)$ and the delayed discrimination signal $D(m - 1)$ as a difference signal $Q(m)$.

When the value of the difference signal $Q(m)$ is included in a first set G1, the switching unit 104 outputs the difference signal as a first difference signal $Q_1(m)$ and outputs a selection signal $C(m)$ associated with the first difference signal $Q_1(m)$ ; when the value of the difference signal $Q(m)$ is included in a second set G2, the switching unit 104 outputs the difference signal as a second difference signal $Q_2(m)$ and outputs a selection signal $C(m)$ associated with the second difference signal $Q_2(m)$. The first set G1 is a set of difference signals such that the total size of the phase ranges in the phase plane that correspond to the difference signals $Q(m)$ is equal to or less than the phase difference between adjacent ideal signal points in the phase plane out of a plurality of ideal signal points of the modulated signal. The second set G2 is a set of difference signals not included in the first set G1. The first set G1 and second set G2 will be described later.

The first decision unit 105 generates a first decision signal $X_1(m)$ corresponding to the size of the first difference signal $Q_1(m)$.

The received signal delay unit 106 outputs a signal obtained by temporally delaying the received signal $R(m)$ as a delayed received signal $R(m - 1)$. The received signal $R(m)$ and the delayed received signal $R(m - 1)$ are both complex valued signals.

The multiply-add operation unit 107 refers to the received signal $R(m)$ and the delayed received signal $R(m - 1)$, carries out a multiply-add operation, and outputs the result of the multiply-add operation as a multiply-add output signal $P(m)$. The multiply-add operation unit 107 performs multiplication operations on the imaginary part of the received signal $R(m)$ and the real part of the delayed received signal $R(m - 1)$, and on the real part of the received signal $R(m)$ and the imaginary part of the delayed received signal $R(m - 1)$, and performs a subtraction operation on a first multiplication result value obtained by multiplication of the imaginary part of the received signal $R(m)$ and the real part of the delayed received signal $R(m - 1)$ and a second multiplication result value obtained by multiplication of the real part of the received signal $R(m)$ and the imaginary part of the delayed received signal $R(m - 1)$ . In the first embodiment, the multiply-add operation unit 107 thereby generates the multiply-add output signal $P(m)$ by performing only a multiplication operation on the imaginary part of the received signal $R(m)$ and the real part of the delayed received signal $R(m - 1)$, a multiplication operation on the real part of the received signal $R(m)$ and the imaginary part of the delayed received signal $R(m - 1)$, and a subtraction operation on two real numbers.

The second decision unit 108 generates a second decision signal $X_2(m)$ corresponding to the sizes of the second difference signal $Q_2(m)$ supplied from the switching unit 104 and the multiply-add output signal $P(m)$ supplied from the multiply-add operation unit 107.

On the basis of the selection signal supplied from the switching unit 104, the selection unit 109 selects one of the first decision signal and the second decision signal and outputs the selected signal as the demodulated signal $Z(m)$.

<1-2> Operation of the First Embodiment

FIG. 2 illustrates the operation of the region discrimination unit 101 in the differential demodulator 100 according to the first embodiment. FIG. 2 shows an example of the relation between the plurality of phase regions used in the region discrimination unit 101 and the discrimination signals $D(m)$ assigned to each of the phase regions. In FIG. 2, starting from phase zero, the phase plane (IQ plane) is divided into regions by boundary lines L(0), L(1), L(2)... spaced at equal phase intervals. The region lying between two mutually adjacent boundary lines: the boundary line L(n) and the boundary line L(n - 1), which is one of the regions into which the phase plane is divided, is assigned the value of *n* as its discrimination signal *D(m)*. Here, *n* is an integer such that $1 \leq n \leq 2N$. Boundary line L(0) and boundary line L(2N) are preferably the same boundary line. 2N is an integer representing twice the modulation multiplicity.

FIG. 3 also illustrates the operation of the region discrimination unit 101 in the differential demodulator 100 according to the first embodiment. FIG. 3 shows an example of the relation between the phase regions used in the region discrimination unit 101 and the discrimination signals assigned to them when the received signal *R(m)* is a DQPSK signal. In FIG. 3, the values of the discrimination signal D(m) are determined in such a way that when the phase of the received signal *R(m)* is from 0 to $\pi/4$, *D(m)* = 1, when the phase of the received signal *R(m)* is from $\pi/4$ to $2\pi/4$, *D(m)* = 2, when the phase of the received signal *R(m)* is from $2\pi/4$ to $3\pi/4$, *D(m)* = 3, and so on. The discrimination signal *D(m)* can be determined, for example, by referring to the signs of the received signal *R(m)* and the difference between the real part and the imaginary part.

The received signal *R(m)* input to the differential demodulator 100 is input to the received signal delay unit 106 and multiply-add operation unit 107 as well as to the region discrimination unit 101. Specific examples of the operation of the received signal delay unit 106 and multiply-add operation unit 107 will be given later.

The discrimination signal *D(m)* determined as described above is input to the discrimination signal delay unit 102. Preferably, the input discrimination signal *D(m)* is held in D-flip-flops, a memory, or the like in the discrimination signal delay unit 102, and the delayed discrimination signal *D(m - 1)* that was held previously is output simultaneously. The interval of time during which the input discrimination signal *D(m)* is held is preferably equal in value to the reception cycle of the received signal *R(m)*.

The discrimination signal *D(m)* output from the region discrimination unit 101 is input to the comparison unit 103. The comparison unit 103 outputs the difference between the discrimination signal *D(m)* and the delayed discrimination signal *D(m - 1)* as a difference signal *Q(m)*.

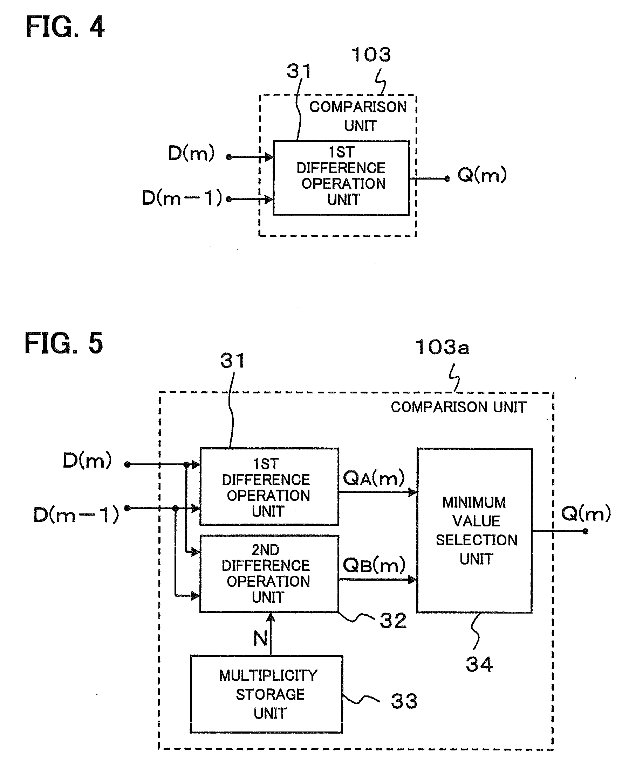

FIG. 4 is a block diagram schematically showing an example of the configuration of the comparison unit 103 in the differential demodulator 100 according to the first embodiment. As shown in FIG. 4, the comparison unit 103 has a first difference operation unit 31. In the comparison unit 103 shown in FIG. 4, the first difference operation unit 31 calculates the difference between the discrimination signal *D(m)* and the delayed discrimination signal *D(m - 1)*, and outputs the result of this calculation as the difference signal *Q(m)*. The first difference operation unit 31 preferably has a function such that, when the result of the difference operation on the discrimination signal *D(m)* and the delayed discrimination signal *D(m - 1)* is negative, a modified value (a modified difference value) obtained by adding a value equal to twice the modulation multiplicity N to the result of the difference operation is output as the difference signal *Q(m)*.

For example, when *D(m)* = 3 and *D(m - 1)* = 1, the value of the difference signal *Q(m)* output from the comparison unit 103 is 2, calculated as follows.

$$Q(m) = D(m) - D(m - 1) = 3 - 1 = 2$$

When *D(m)* = 6 and *D(m - 1)* = 1, the value of the difference signal *Q(m)* output from the comparison unit 103 is 5, calculated as follows.

$$Q(m) = D(m) - D(m - 1) = 6 - 1 = 5$$

When *D(m)* = 1 and *D(m - 1)* = 8, the value of the difference signal *Q(m)* output from the comparison unit 103 is 1, calculated as follows.

$$Q(m) = D(m) - D(m - 1) + 2N = 1 - 8 + 8 = 1$$

Since D(m) - *D(m - 1)* = -7, the value 8, equal to twice the modulation multiplicity N, is added in this operation.

Since the first difference operation unit 31 has the configuration shown in FIG. 4, it can determine the amount of phase rotation in the counterclockwise direction from the phase region in which the delayed received signal received signal *R(m - 1)* resides to the phase region in which the received signal *R(m)* resides.

FIG. 5 is a block diagram schematically showing another example of the configuration of the comparison unit in the differential demodulator 100 according to the first embodiment. Whereas the comparison unit in FIG. 1 is indicated by reference characters 103, reference characters 103a are assigned to the comparison unit in FIG. 5, which has a different exemplary configuration. Comparison unit 103a may be configured with a first difference operation unit 31, a second difference operation unit 32, a multiplicity storage unit 33, and a minimum value selection unit 34, as shown in FIG. 5. In the comparison unit 103a shown in FIG. 5, the first difference operation unit 31 calculates the difference between the discrimination signal $D(m)$ and the delayed discrimination signal $D(m - 1)$, and outputs the result of this calculation as a first candidate difference signal $Q_A(m)$. The first difference operation unit 31 preferably has a function such that, when the result of the difference operation on the discrimination signal $D(m)$ and delayed discrimination signal $D(m - 1)$ is negative, a modified value obtained by adding a value equal to twice the modulation multiplicity N to the result of the difference operation is output as the first candidate difference signal $Q_A(m)$. The second difference operation unit 32 in the comparison unit 103a preferably has a function such that the difference between the discrimination signal $D(m)$ and the delayed discrimination signal $D(m - 1)$ is simultaneously subtracted from the value equal to twice the modulation multiplicity N and the result is output as a second candidate difference signal $Q_B(m)$. The second difference operation unit 32 preferably has a function such that, when the result of the difference operation on the discrimination signal $D(m)$ and delayed discrimination signal $D(m - 1)$ is negative, a modified value obtained by adding the value equal to twice the modulation multiplicity $N$ to the result of the difference operation is subtracted from the value equal to twice the modulation multiplicity $N$ and the resulting value is output as the second candidate difference signal $Q_B(m)$. In addition, the minimum value selection unit 34 in the comparison unit 103a has a function of selecting the smaller value from among the first candidate difference signal $Q_A(m)$ and the second candidate difference signal $Q_B(m)$ ; the selected value can be output as the difference signal $Q(m)$.

In the comparison unit 103a in FIG. 5, when $D(m)$ = 3 and D(m - 1) = 1, for example, the value of the first candidate difference signal $Q_A(m)$ is 2, calculated as

$$Q_A(m) = 3 - 1 = 2,$$

and the value of the second candidate difference signal $Q_B(m)$ is 6, calculated as

$$Q_B(m) = (4 \times 2) - (3 - 1) = 6,$$

so the value of the difference signal $Q(m)$ is 2, this being the smaller of $Q_A(m)$ and $Q_B(m)$.

Again in the comparison unit 103a in FIG. 5, when $D(m)$ = 6 and $D(m - 1)$ = 1, the value of the first candidate difference signal $Q_A(m)$ is 5, calculated as

$$Q_A(m) = 6 - 1 = 5,$$

and the value of the second candidate difference signal $Q_B(m)$ is 3, calculated as

$$Q_B(m) = (4 \times 2) - (6 - 1) = 3,$$

so the value of the difference signal $Q(m)$ is 3, this being the smaller of $Q_A(m)$ and $Q_B(m)$.

Still further in the comparison unit 103a in FIG. 5, when $D(m)$ = 1 and $D(m - 1)$ = 8, since $D(m) - D(m - 1)$ = -7, the value 8 equal to twice the modulation multiplicity $N$ is added and the value of the first candidate difference signal $Q_A(m)$ is 1, calculated as follows:

$$Q_A(m) = -7 + 8 = 1$$

The value of the second candidate difference signal $Q_B(m)$ is simultaneously calculated as 7, as follows:

$$Q_B(m) = (4 \times 2) - (-7 + 8) = 7$$

The value of the difference signal $Q(m)$ is therefore 1, this being the smaller of $Q_A(m)$ and $Q_B(m)$.

Yet again in the comparison unit 103a in FIG. 5, when $D(m)$ = 1 and $D(m - 1)$ = 3, since $D(m) - D(m - 1)$ = -2, the value 8 equal to twice the modulation multiplicity $N$ is added and the value of the first candidate difference signal

$Q_A(m)$ is 6, calculated as follows:

$$Q_A(m) \ = \ -2 \ + \ 8 \ = \ 6$$

The value of the second candidate difference signal $Q_B(m)$ is simultaneously calculated as 2, as follows:

$$Q_B(m) \ = \ (4 \ \times \ 2) \ - \ (-2 \ + \ 8) \ = \ 2$$

The value of the difference signal $Q(m)$ is therefore 2, this being the smaller of $Q_A(m)$ and $Q_B(m)$. In this way, use of the configuration of the comparison unit 103a shown in FIG. 5 enables the differential demodulator 100 according to the first embodiment to determine the amount of phase rotation from the phase region in which the delayed received signal received signal $R(m - 1)$ resides to the phase region in which the received signal $R(m)$ resides.

The difference signal $Q(m)$ determined as described above is input to the switching unit 104. When the value of the input difference signal $Q(m)$ is included in the first set G1, the switching unit 104 outputs the difference signal $Q(m)$ as the first difference signal $Q_1(m)$, and outputs a selection signal $C(m)$ associated with the first difference signal $Q_1(m)$. When the value of the input difference signal $Q(m)$ is included in the second set G2, the switching unit 104 outputs the difference signal $Q(m)$ as the second difference signal $Q_2(m)$, and outputs a selection signal $C(m)$ associated with the second difference signal $Q_2(m)$.

In a preferred mode, the switching unit 104 may be configured in such a way that when the size $Wa$ of the phase range $W$ of the candidate phase differences between the discrimination signal $D(m)$ and the delayed discrimination signal $D(m - 1)$ determined according to the difference signal $Q(m)$ is within a prescribed reference phase difference A, the difference signal $Q(m)$ is regarded as being included in the first set G1 and the difference signal $Q(m)$ is output as the first difference signal $Q_1(m)$, and when the size $Wa$ of the phase range $W$ of the candidate phase differences between the discrimination signal $D(m)$ and the delayed discrimination signal $D(m - 1)$ determined according to the difference signal $Q(m)$ exceeds the prescribed reference phase difference $A$, the difference signal $Q(m)$ is regarded as being included in the second set G2 and the difference signal $Q(m)$ is output as the second difference signal $Q_2(m)$. It is further preferable that the reference phase difference A should be the phase difference between adjacent ideal signal points in the phase plane, in the constellation of ideal signal points of the modulated signal.

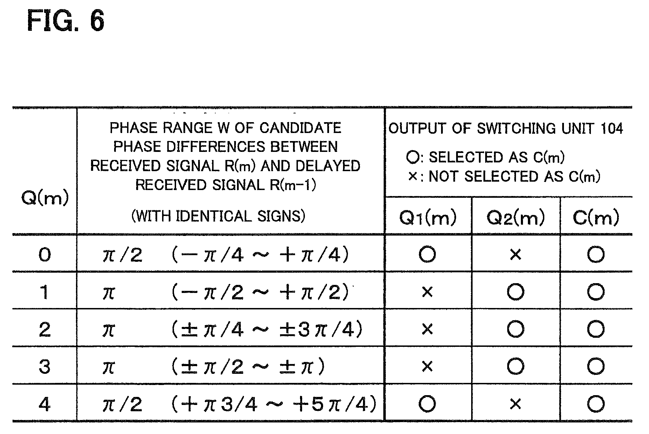

FIG. 6 illustrates the operation of the switching unit 104 in the differential demodulator 100 according to the first embodiment. In FIG. 6, the received signal $R(m)$ is a DQPSK signal and FIG. 5 is applied as the configuration of the comparison unit 103. When the value of the difference signal $Q(m)$ is included in the first set G1, the switching unit 104 outputs the difference signal as the first difference signal $Q_1(m)$ and outputs a selection signal $C(m)$ corresponding to the first difference signal $Q_1(m)$ ; when the value of the difference signal $Q(m)$ is included in the second set G2, the switching unit 104 outputs the difference signal as the second difference signal $Q_2(m)$ and outputs a selection signal $C(m)$ corresponding to the second difference signal $Q_2(m)$. The first set G1 is a set of difference signals such that the total size of the phase regions in the phase plane corresponding to the difference signals $Q(m)$ is equal to or less than the phase difference between ideal signal points, in the constellation of ideal signal points of the modulated signal, that are adjacent in the phase plane. The second set G2 is the set of difference signals not included in the first set G1.

First the case in which the difference signal $Q(m)$ in FIG. 6 is 0 will be described. In this case, the sum of the sizes $Wa$ of the phase ranges $W$ in the phase plane that correspond to the difference signal $Q(m)$ is $\pi/2$, and in the constellation of ideal signal points of the modulated signal, the phase difference between adjacent ideal signal points is $\pi/2$, so the sum of the sizes of the phase ranges in the phase plane corresponding to the difference signal $Q(m)$ is equal to or less than the phase difference between adjacent ideal signal points in the phase plane (the prescribed reference phase difference $A)$. The difference signal $Q(m)$ in this case is accordingly included in the first set G1.

The case in which the difference signal $Q(m)$ in FIG. 6 is 1 will also be described. In this case, the sum of the sizes $Wa$ of the phase ranges $W$ in the phase plane that correspond to the difference signal $Q(m)$ is $\pi$, and in the constellation of ideal signal points of the modulated signal, the phase difference between adjacent ideal signal points is $\pi/2$, so the sum of the sizes of the phase ranges in the phase plane corresponding to the difference signal $Q(m)$ is greater than the phase difference between adjacent ideal signal points in the phase plane (the prescribed reference phase difference A). The difference signal $Q(m)$ in this case is accordingly included in the second set G2.

The case in which the difference signal $Q(m)$ in FIG. 6 is 2 will also be described. In this case, the sum of the sizes $Wa$ of the phase ranges $W$ in the phase plane that correspond to the difference signal $Q(m)$ is $\pi$, and in the constellation of ideal signal points of the modulated signal, the phase difference between adjacent ideal signal points is $\pi/2$, so the sum of the sizes of the phase ranges in the phase plane corresponding to the difference signal $Q(m)$ is greater than the phase difference between adjacent ideal signal points in the phase plane (the prescribed reference phase difference A). The difference signal $Q(m)$ in this case is accordingly included in the second set G2.

The case in which the difference signal $Q(m)$ in FIG. 6 is 3 will also be described. In this case, the sum of the sizes $Wa$ of the phase ranges $W$ in the phase plane that correspond to the difference signal $Q(m)$ is $\pi$, and in the constellation of ideal signal points of the modulated signal, the phase difference between adjacent ideal signal points is $\pi/2$, so the sum of the sizes of the phase ranges in the phase plane corresponding to the difference signal $Q(m)$ is greater than the phase difference between adjacent ideal signal points in the phase plane (the prescribed reference phase difference A). The difference signal $Q(m)$ in this case is accordingly included in the second set G2.

The case in which the difference signal $Q(m)$ in FIG. 6 is 4 will also be described. In this case, the sum of the sizes $Wa$ of the phase ranges $W$ in the phase plane that correspond to the difference signal $Q(m)$ is $\pi/2$, and in the constellation of ideal signal points of the modulated signal, the phase difference between adjacent ideal signal points is $\pi/2$, so the sum of the sizes of the phase ranges in the phase plane corresponding to the difference signal $Q(m)$ is equal to or less than the phase difference between adjacent ideal signal points in the phase plane (the prescribed reference phase difference A). The difference signal $Q(m)$ in this case is accordingly included in the first set G1.

According to FIG. 6, first the phase range W of the candidate phase differences between the discrimination signal D(m) and delayed discrimination signal $D(m - 1)$ corresponding to the value of the difference signal $Q(m)$ is determined. The method of determining this phase range $W$ will now be described through the use of more specific examples.

If the phase of the received signal $R(m)$ is $\pi/6$, for example, then with reference to FIG. 3, the value of the discrimination signal $D(m)$ is 1. If the phase of the delayed discrimination signal $D(m - 1)$ is $\pi/8$, then with similar reference to FIG. 3, the value of the delayed discrimination signal $D(m - 1)$ is 1. The value of the difference signal Q(m) output from the comparison unit 103 is accordingly zero, calculated as $Q(m) = 1 - 1 = 0$.

From FIG. 3 it can also be seen that the range of received signal phases in which the discrimination signal $D(m)$ is 1 is the phase range from 0 to $\pi/4$. That is, when the value of the discrimination signal $D(m)$ is determined, the information that the phase of the received signal $R(m)$ resides in the range from 0 to $\pi/4$ is obtained simultaneously. The information that the phase of the delayed received signal $R(m - 1)$ resides in the range from 0 to $\pi/4$ is similarly obtained.

Now since the comparison unit 103 calculates the difference between the received signal R(m), the phase of which resides in the range from 0 to $\pi/4$, and the delayed received signal $R(m - 1)$, the phase of which resides in the range from 0 to $\pi/4$, it can be decided that the phase difference between the two signals resides in the interval from $-\pi/4$ to $+\pi/4$. The phase range $W$ of the candidate phase differences between the received signal $R(m)$ and the delayed received signal $R(m - 1)$ is accordingly $\pi/4 - (-\pi/4) = \pi/2$ in size. The sizes of the phase ranges $W$ when $Q(m)$ is equal to 1, 2, 3, or 4 are determined by similar reasoning.

Next, with reference to FIG. 6, the switching unit 104 compares the size $Wa$ of the phase range $W$ determined as described above with the prescribed reference phase difference $A$, outputs the first difference signal $Q_1(m)$ when the size $Wa$ of the phase range $W$ is equal to or less than the reference phase difference A (when it is included in the first set G1), and outputs the second difference signal $Q_2(m)$ when the size $Wa$ of the phase range $W$ is greater than the reference phase difference $A$ (when it is included in the second set G2). When the switching unit 104 receives a DQPSK signal, the phases of the four ideal signal points in the phase plane are spaced at intervals of $\pi/2$, so the prescribed reference phase difference $A$ is preferably set at $\pi/2$.

Now according to FIG. 6, the size $Wa$ of the phase range $W$ of the candidate phase differences between the received signal $R(m)$ and the delayed received signal $R(m - 1)$ is equal to or less than the prescribed reference phase difference A when $Q(m) = 0$ and when $Q(m) = 4$. The switching unit 104 accordingly outputs the first difference signal $Q_1(m)$ as the difference signal $Q(m)$ in these two cases and outputs the second difference signal $Q_2(m)$ as the difference signal $Q(m)$ in the other cases. The selection signal $C(m)$ is used for the purpose of identifying the signal output by the switching unit 104 in subsequent stages, and is preferably always output, regardless of the value of the difference signal $Q(m)$. The selection signal $C(m)$ may be, for example, a one-bit signal having the value '1' when the first difference signal $Q_1(m)$ is output as the difference signal $Q(m)$ and the value '0' when the second difference signal $Q_2(m)$ is output as the difference signal $Q(m)$.

While the first difference signal $Q_1(m)$ is being output as the difference signal $Q(m)$, output of the second difference signal $Q_2(m)$ may be halted in the switching unit 104. Conversely, while the second difference signal $Q_2(m)$ is being output as the difference signal $Q(m)$, output of the first difference signal $Q_1(m)$ may be halted in the switching unit 104.

The first difference signal $Q_1(m)$ output from the switching unit 104 as described above is input to the first decision unit 105. The first decision unit 105 outputs a first decision signal $X_1(m)$ corresponding to the magnitude of the first difference signal $Q_1(m)$. The specific operation of the first decision unit 105 will be described below.

FIGs. 7(a) and 7(b) illustrate the operation of the first decision unit 105 in the differential demodulator 100 according to the first embodiment. For example, When the received signal $R(m)$ is a DQPSK signal, the first difference signal $Q_1(m)$ is output when the difference signal $Q(m)$ is 0 and when the difference signal $Q(m)$ is 4, as shown in FIG. 6. As also shown in FIG. 6, when $Q(m) = 0$ the phase range W is the range from $-\pi/4$ to $+\pi/4$ and when $Q(m) = 0$ the phase range W is the range from $3\pi/4$ to $5\pi/4$, so if these ranges are expressed in the phase plane, they are the vertically hatched ranges in FIG. 7(a).

If the phases of the four ideal signal points in the DQPSK signal constellation are assumed to be 0, $\pi/2$, $\pi$, and $3\pi/2$, the regions that can be occupied by the demodulated signal points corresponding to these ideal signal points are as shown in FIG. 7(b). Specifically, the phase range $W$ in which the demodulated signal corresponding to the ideal signal point with phase 0 ($Z(m) = 0$) may lie is the range from $-\pi/4$ to $+\pi/4$, the phase range W in which the demodulated signal corresponding to the ideal signal point with phase $\pi/2$ ($Z(m) = 1$) may lie is the range from $+\pi/4$ to $+3\pi/4$, the phase range W in which the demodulated signal corresponding to the ideal signal point with phase $\pi$ ($Z(m) = 2$) may lie is the range from $+3\pi/4$ to $+5\pi/4$, and the phase range $W$ in which the demodulated signal corresponding to the ideal signal point with phase $3\pi/2$ ($Z(m) = 3$) may lie is the range from $+5\pi/4$ to $+7\pi/4$.

From FIGs. 7(a) and 7(b), accordingly, when the first difference signal $Q_1(m)$ is 0, the first decision unit 105 may output '0', representing the ideal signal point of phase 0 (that is, $Z(m)$ 0), as the first decision signal $X_1(m)$, and when the first difference signal $Q_1(m)$ is 4, the first decision unit 105 may output '2', representing the ideal signal point of phase $\pi$ (that is, $Z(m)$ - 2), as the first decision signal $X_1(m)$. Use of a configuration of this type enables the demodulated signal to be obtained without performing any multiply-add operations for differential demodulation.

As shown in FIG. 1, in the differential demodulator 100 according to the first embodiment, the received signal R(m) is input to the received signal delay unit 106 and multiply-add operation unit 107. In the received signal delay unit 106, the input received signal $R(m)$ is preferably held in D-flip-flops, a memory, or the like and the delayed received signal $R(m - 1)$ that was held previously is output simultaneously. The interval of time during which the input received signal $R(m)$ is held is preferably equal in value to the reception cycle of the received signal $R(m)$.

As also shown in FIG. 1, the multiply-add operation unit 107 performs a multiply-add operation with reference to the received signal $R(m)$ and the delayed received signal $R(m - 1)$ and outputs the result of the multiply-add operation as a multiply-add output signal $P(m)$.

In a preferred mode, the multiply-add operation unit 107 may output, as the multiply-add output signal $P(m)$, a value obtained by subtracting the result of a multiplication operation performed on the real part of the received signal $R(m)$ and the imaginary part of the delayed received signal $R(m - 1)$ from the result of a multiplication operation performed on the imaginary part of the received signal $R(m)$ and the real part of the delayed received signal $R(m - 1)$.

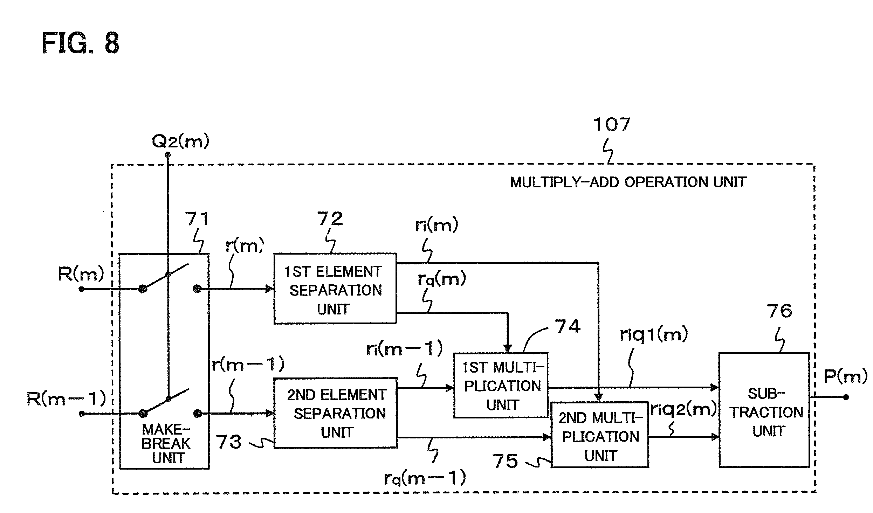

FIG. 8 is a block diagram schematically showing the configuration of the multiply-add operation unit 107 in the differential demodulator 100 according to the first embodiment. As shown in FIG. 8, the multiply-add operation unit 107 has a make-break unit 71, a first element separation unit 72, a second element separation unit 73, a first multiplication unit 74, a second multiplication unit 75, and a subtraction unit 76. FIG. 8 also shows that in the multiply-add operation unit 107, the received signal $R(m)$ and delayed received signal $R(m - 1)$ are both first input to the make-break unit 71.

Preferably, the make-break unit 71 outputs the received signal $R(m)$ as a received internal signal r(m), and simultaneously outputs the delayed received signal $R(m - 1)$ as a delayed received internal signal r(m - 1). When the switching unit 104 does not output the second difference signal $Q_2(m)$, the make-break unit 71 may simultaneously halt the output of the received internal signal r(m) and delayed received internal signal $r(m - 1)$. If the received signal $R(m)$ is a DQPSK signal, for example, then as can be understood from FIG. 6, the second difference signal $Q_2(m)$ is output from the switching unit 104 when the difference signal $Q(m)$ is 1, when the difference signal $Q(m)$ is 2, or when the difference signal $Q(m)$ is 3.

Next, the received internal signal $r(m)$ is input to the first element separation unit 72 and separated into a real part $r_i(m)$ and an imaginary part $r_q(m)$. Similarly, the delayed received internal signal r(m - 1) is input to the second element separation unit 73 and separated into a real part $r_i(m - 1)$ and an imaginary part $r_q(m - 1)$ .

The first element separation unit 72 and second element separation unit 73 may have the same configuration. Alternatively, if circuits or computations can be shared by time division or the like, the functions of the first element separation unit 72 and second element separation unit 73 may be implemented by use of a single element separation unit. The processing performed by the first element separation unit 72 and second element separation unit 73 may be omitted if the received internal signal $r(m)$ and delayed received internal signal $r(m - 1)$ are already separated into a real part and an imaginary part.

In the first multiplication unit 74 in the multiply-add operation unit 107, a multiplication process is carried out on the real part $r_i(m - 1)$ and imaginary part $r_q(m)$ and the result of the multiplication process is output as a first multiplication signal $r_{iq1}(m)$. In the second multiplication unit 75, a multiplication process is carried out on the real part $r_i(m)$ and imaginary part $rq(m - 1)$ and the result of the multiplication process is output as a second multiplication signal $r_{iq2}(m)$. The first multiplication unit 74 and second multiplication unit 75 may have the same configuration. Alternatively, if circuits or computations can be shared by time division or the like, the functions of the first multiplication unit 74 and second multiplication unit 75 may be implemented by use of a single multiplication unit.

The subtraction unit 76 last carries out a subtraction signal process in which the second multiplication signal riq2(m) is subtracted from the first multiplication signal $r_iq_1(m)$ and outputs the result of the subtraction signal process as a multiply-add output signal $P(m)$.

The make-break unit 71 outputs the received signal $R(m)$ and delayed received signal $R(m - 1)$ as a received internal signal r(m) and a delayed received internal signal r(m - 1) only when the second difference signal $Q_2(m)$ is output. Provided the multiply- add operation unit 107 is configured to carry out the calculation in equation (2) with reference to the real part $r_i(m)$ and imaginary part $r_q(m)$ of the received internal signal $r(m)$ and the real part $r_i(m - 1)$ and imaginary part $r_q(m - 1)$ of the delayed received internal signal $r(m - 1)$, the multiply-add operation unit 107 is not restricted to the configuration described above.

$$P(m) = r_i(m - 1) \times r_q(m) - r_i(m) \times r_q(m - 1) \qquad (2)$$

The multiply-add output signal $P(m)$ output as described above is input to the second decision unit 108. The second decision unit 108 outputs a second decision signal $X_2(m)$ corresponding to the magnitudes of the second difference signal $Q_2(m)$ and the multiply-add output signal P(m).

In a preferred mode, the second decision unit 108 may select, from among the constellation of ideal signal points of the modulated signal, an ideal signal point corresponding to the result of comparisons of the value of the second difference signal $Q_2(m)$ and the value of the multiply-add output signal $P(m)$ with at least one prescribed threshold value $T$, and output the value of the selected ideal signal point as the second decision signal $X_2(m)$. Specific examples of the operation of the second decision unit 108 will be described below.

The second decision unit 108 preferably operates only when the second difference signal $Q_2(m)$ is output from the switching unit 104. When the received signal $R(m)$ is a DQPSK signal, for example, the switching unit 104 outputs the second difference signal $Q_2(m)$ when the difference signal $Q(m)$ is 1, when the difference signal $Q(m)$ is 2, or when the difference signal $Q(m)$ is 3, as can be understood from FIG. 6.

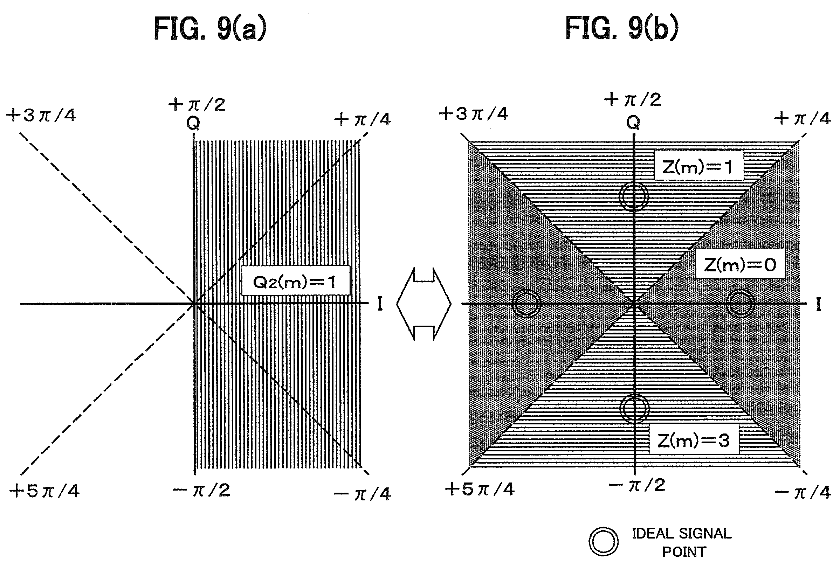

FIGs. 9(a) and 9(b) illustrate the operation of the second decision unit 108 in the differential demodulator 100 according to the first embodiment. From FIG. 6, when the second difference signal $Q_2(m)$ is 1 ($Q_2(m)$ = 1), the phase range $W$ is the range from $-\pi/2$ to $+\pi/2$, so when expressed on the phase plane, this region appears as the vertically hatched region in FIG. 9(a). If the phases of the points corresponding to the four ideal signal points in the DQPSK signal constellation are assumed to be 0, $\pi/2$, $\pi$, and $3\pi/2$, the ranges in which the demodulated signal points corresponding to these ideal signal points may reside are as shown in FIG. 9(b). The relation between the phase values at the ideal signal points and the Z(m) values of the signal points is as described above. Accordingly, when $Q_2(m)$ = 1 as shown in FIG. 9(a), there are three candidate demodulated signal points: $Z(m)$ = 0, $Z(m)$ = 1, and $Z(m)$ = 3, as shown in FIG. 9(b).

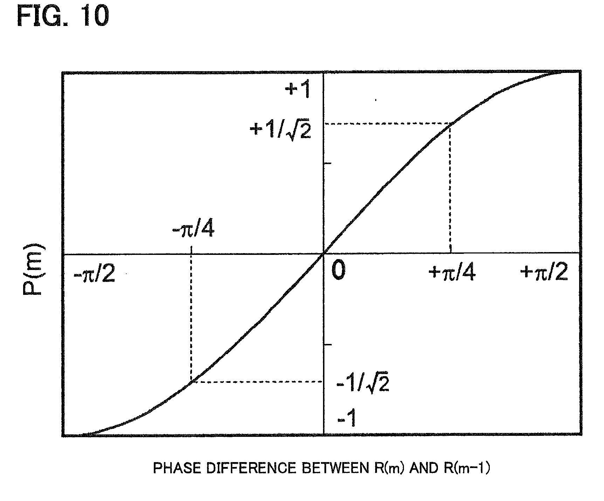

FIG. 10 illustrates the operation of the second decision unit 108 in the differential demodulator 100 according to the first embodiment. If, for example, the received signal is assumed to be received while the receiver equipped with the differential demodulator 100 is not moving (e.g., when a vehicle in which the receiver is mounted is in a stopped state or the like), the received signal $R(m)$ is assumed to have unvarying unity amplitude, and the amplitude is assumed to be 1, then the phase difference between the received signal $R(m)$ and the delayed received signal $R(m - 1)$, which is the phase difference of the demodulated signal, is related to the value of the multiply-add output signal $P(m)$ as shown in FIG. 10. From FIG. 10 it can be seen that:

When the multiply-add output signal $P(m)$ is in the range from -1 to $-1/\sqrt{2}$ ($= -1/(2^{1/2})$), the difference between the received signal $R(m)$ and the delayed received signal $R(m - 1)$ is in the range from $-\pi/2$ to $-\pi/4$;
When the multiply-add output signal $P(m)$ is in the range from $-1/\sqrt{2}$ to $+1/\sqrt{2}$, the difference between the received signal $R(m)$ and the delayed received signal $R(m - 1)$ is in the range from $-\pi/4$ to $+\pi/4$; and
When the multiply-add output signal $P(m)$ is in the range from $+1/\sqrt{2}$ to $+1$, the difference between the received signal $R(m)$ and the delayed received signal $R(m - 1)$ is in the range from $+\pi/4$ to $+\pi/2$.

Accordingly, if $-1/\sqrt{2}$ and $+1/\sqrt{2}$ are selected as prescribed thresholds T, it can be determined that:

When the value of the multiply-add output signal P(m) is $-1/\sqrt{2}$ or less, $Z(m)$ = 3;

When the value of the multiply-add output signal $P(m)$ exceeds $-1/\sqrt{2}$ and is equal to $+1/\sqrt{2}$ or less, $Z(m) = 0$; and
When the value of the multiply-add output signal $P(m)$ exceeds $+1/\sqrt{2}$, $Z(m) = 1$.

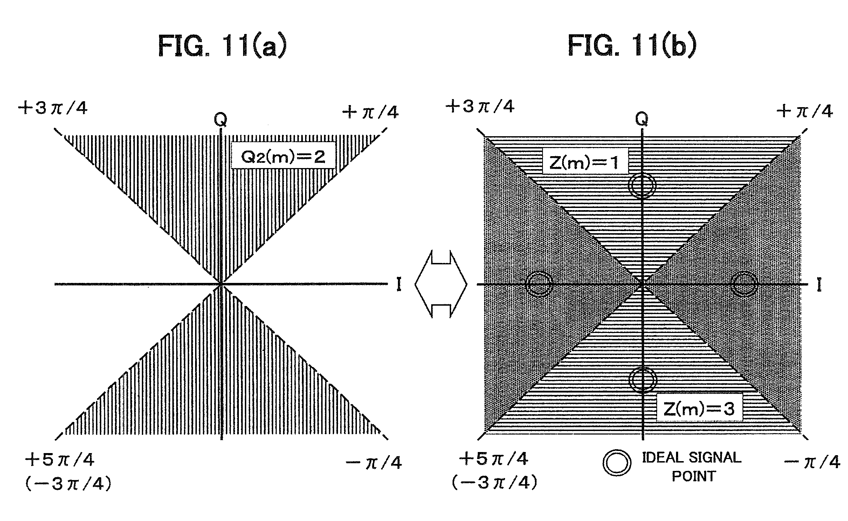

FIGs. 11(a) and 11(b) illustrate the operation of the second decision unit 108 in the differential demodulator 100 according to the first embodiment. From FIG. 6, when $Q_2(m)$ = 2, the phase range $W$ is the range from $\pm\pi/4$ to $\pm3\pi/4$ (with identical signs), so when expressed on the phase plane, this region appears as the vertically hatched region in FIG. 11(a). If the phases of the four ideal signal points in the DQPSK signal constellation are assumed to be 0, $\pi/2$, $\pi$, and $3\pi/2$, the regions that can be occupied by the demodulated signal points corresponding to these ideal signal points are as shown in FIG. 11(b). The relation between the phase values at the ideal signal points and the $Z(m)$ values of the signal points is as described above. When $Q_2(m)$ = 2 there are accordingly two candidate demodulated signal points: $Z(m)$ - 1 and $Z(m)$ - 3.

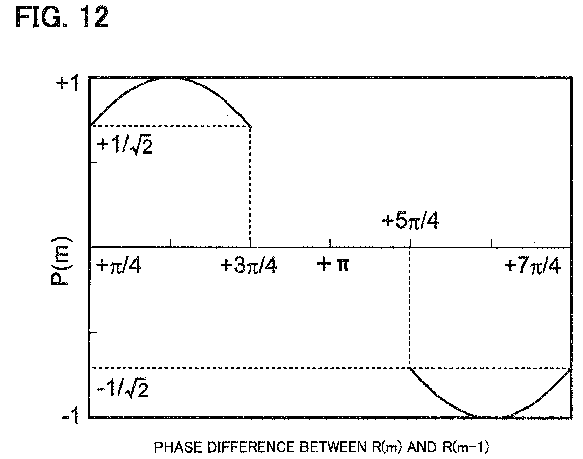

FIG. 12 illustrates the operation of the second decision unit 108 in the differential demodulator 100 according to the first embodiment. If, for example, the received signal is assumed to be received while the receiver equipped with the differential demodulator 100 is not moving (e.g., when a vehicle in which the receiver is mounted is in a stopped state or the like), the received signal $R(m)$ is assumed to have unvarying unity amplitude, and the amplitude is assumed to be 1, then the phase difference between the received signal $R(m)$ and the delayed received signal $R(m$ - 1), which is the phase difference of the demodulated signal, is related to the value of the multiply-add output signal $P(m)$ as shown in FIG. 12. From FIG. 12 it can be seen that:

When the multiply-add output signal $P(m)$ is in the range from +1/√2 to +1, the difference between the received signal $R(m)$ and the delayed received signal $R(m$ - 1) is in the range from +$\pi$/4 to +3$\pi$/4; and
When the multiply-add output signal $P(m)$ is in the range from -1 to -1/√2, the difference between the received signal $R(m)$ and the delayed received signal $R(m$ - 1) is in the range from +5$\pi$/4 to +7$\pi$/4.

Accordingly, if 0 is selected as the prescribed threshold $T$, it can be determined that when the value of the multiply-add output signal $P(m)$ is 0 or less, $Z(m)$ = 3, and when the value of the multiply-add output signal $P(m)$ exceeds 0, $Z(m)$ = 1.

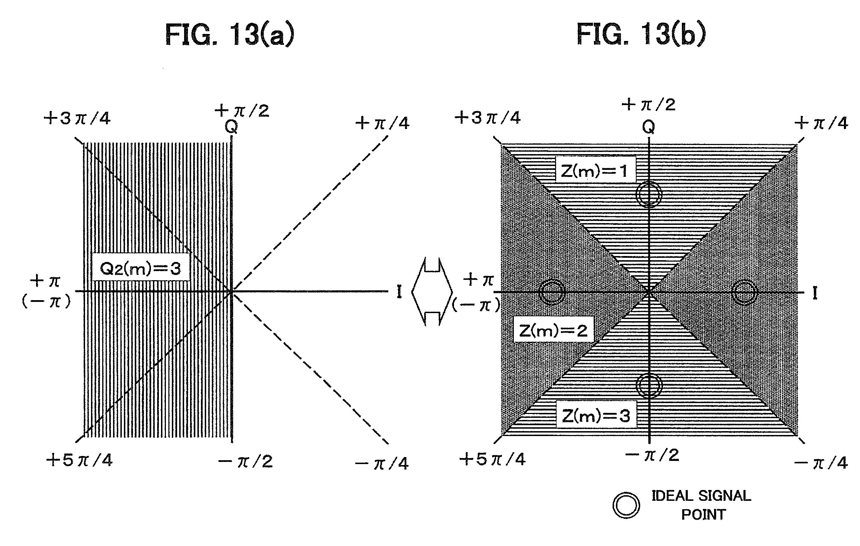

FIGs. 13(a) and 13(b) illustrate the operation of the second decision unit 108 in the differential demodulator 100 according to the first embodiment. From FIG. 6, when $Q_2(m)$ = 3, the phase range $W$ is the range from $\pm\pi$/2 to $\pm\pi$ (with identical signs), so when expressed on the phase plane, this region appears as the vertically hatched region in FIG. 13(a). If the phases of the four ideal signal points in the DQPSK signal constellation are assumed to be 0, $\pi$/2, $\pi$, and 3$\pi$/2, the regions that can be occupied by the demodulated signal points corresponding to these ideal signal points are as shown in FIG. 13(b). The relation between the phase values at the ideal signal points and the $Z(m)$ values of the signal points is as described above. When $Q_2(m)$ = 3 there are accordingly three candidate demodulated signal points:

$$Z(m) = 1, \ Z(m) = 2, \text{ and } Z(m) = 3.$$

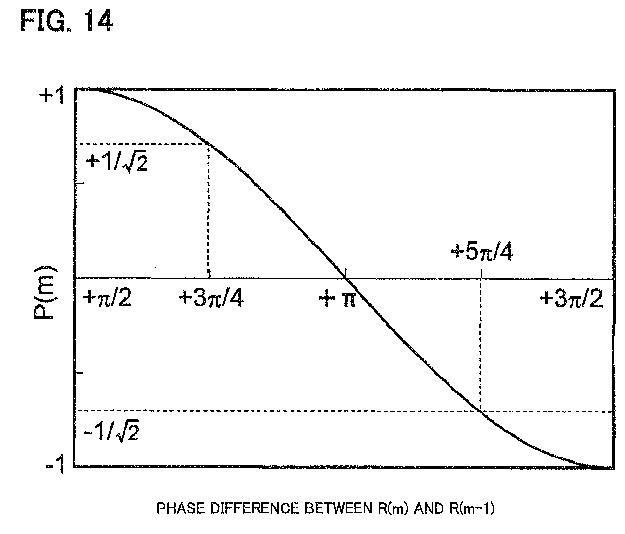

FIG. 14 illustrates the operation of the second decision unit 108 in the differential demodulator 100 according to the first embodiment. If, for example, the received signal is assumed to be received while the receiver equipped with the differential demodulator 100 is not moving (e.g., when a vehicle in which the receiver is mounted is in a stopped state or the like), the received signal $R(m)$ is assumed to have unvarying unity amplitude, and the amplitude is assumed to be 1, then the phase difference between the received signal $R(m)$ and the delayed received signal R(m - 1), which is the phase difference of the demodulated signal, is related to the value of the multiply-add output signal $P(m)$ as shown in FIG. 14. From FIG. 14 it can be seen that:

When the multiply-add output signal $P(m)$ is in the range from +1/√2 to +1, the difference between the received signal $R(m)$ and the delayed received signal $R(m$ - 1) is in the range from +$\pi$/2 to +3$\pi$/4;
When the multiply-add output signal $P(m)$ is in the range from -1/√2 to +1/√2, the difference between the received signal $R(m)$ and the delayed received signal $R(m$ - 1) is in the range from +3$\pi$/4 to +5$\pi$/4; and
When the multiply-add output signal $P(m)$ is in the range from -1 to -1/√2, the difference between the received signal R(m) and the delayed received signal $R(m$ - 1) is in the range from +5$\pi$/4 to +3$\pi$/2.

Accordingly, if -1/√2 and +1/√2 are selected as prescribed thresholds T, it can be determined that when the value of the multiply-add output signal $P(m)$ is -1/√2 or less, $Z(m)$ = 3; when the value of the multiply-add output signal $P(m)$ exceeds -1/√2 and is equal to +1/√2 or less, $Z(m)$ = 2; and when the value of the multiply-add output signal $P(m)$ exceeds +1/√2, $Z(m)$ = 1.

Use of this type of configuration for the second decision unit 108 enables the demodulated signal to be obtained just by referring to the multiply-add output signal $P(m)$, which has been obtained by performing a limited number of multiply-add operations.

The first decision signal $X_1(m)$ and second decision signal $X_2(m)$ obtained by the above processing are input to the selection unit 109. On the basis of the selection signal $C(m)$, the selection unit 109 outputs either the first decision signal $X_1(m)$ or the second decision signal $X_2(m)$ as the demodulated signal $Z(m)$. If the selection signal $C(m)$ is assumed to be a one-bit signal that is '1' when the first difference signal $Q_1(m)$ is output and '0' when the second difference signal $Q_2(m)$ is output, for example, the selection unit 109 outputs the first decision signal $X_1(m)$ as the demodulated signal $Z(m)$ when the selection signal $C(m)$ is '1' and the second decision signal $X_2(m)$ as the demodulated signal Z(m) when the selection signal $C(m)$ is '0'.

<1-3> Effects of the First Embodiment

With the differential demodulator 100 and differential demodulation method according to the first embodiment, accordingly, a region in which the received signal resides in the phase plane (one of the vertically hatched regions in FIG. 7(a), 9(a), 11(a), or 13(a)) can be identified before demodulation, and the minimal computational procedure necessary for demodulation can be singled out in advance, with the effect that the amounts of circuitry and computation necessary for the differential demodulation process can be reduced.

<2> Second Embodiment

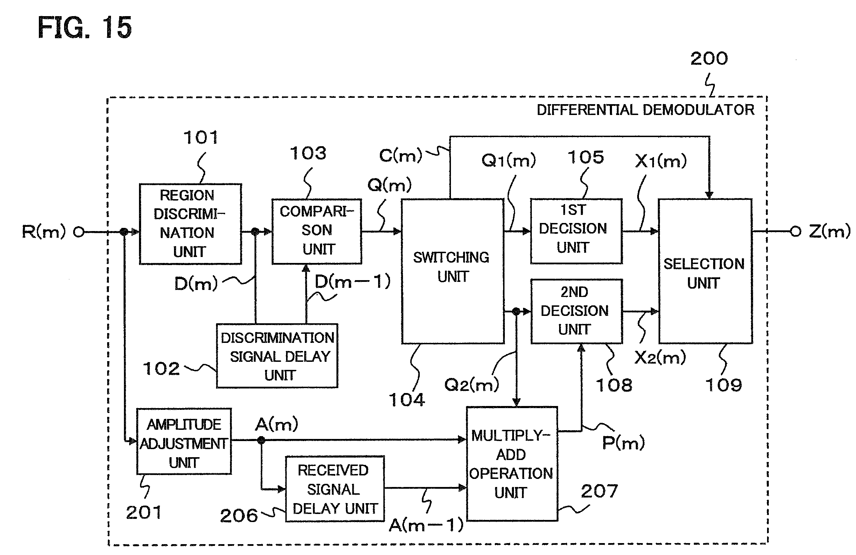

FIG. 15 is a block diagram schematically showing the configuration of a differential demodulator 200 according to a second embodiment of the invention. This differential demodulator 200 is a device capable of carrying out the differential demodulation method according to the second embodiment. Component elements in FIG. 15 that are identical to or correspond to component elements of the differential demodulator 100 according to the first embodiment shown in FIG. 1 have the same reference characters as shown in FIG. 1.
The second embodiment differs from the first embodiment in the following three points.

(1) As a component element not provided in the differential demodulator 100 according to the first embodiment (FIG. 1), the differential demodulator 200 according to the second embodiment, shown in FIG. 15, is provided with an amplitude adjustment unit 201 that inputs the received signal $R(m)$ and outputs a normalized received signal $A(m)$.
(2) Whereas the received signal delay unit 106 in the differential demodulator 100 according to the first embodiment (FIG. 1) inputs the received signal $R(m)$ and outputs the delayed received signal $R(m - 1)$, the received signal delay unit 206 in the differential demodulator 200 according to the second embodiment (FIG. 15) inputs the normalized received signal A(m) and outputs a normalized delayed received signal $A(m - 1)$.
(3) Whereas the multiply-add operation unit 107 in the differential demodulator 100 according to the first embodiment (FIG. 1) inputs the received signal $R(m)$, the delayed received signal $R(m - 1)$, and the second difference signal $Q_2(m)$ and outputs the add-multiply output signal $P(m)$, the multiply-add operation unit 207 in the differential demodulator 200 according to the second embodiment inputs the normalized received signal $A(m)$, the normalized delayed received signal $A(m - 1)$, and the second difference signal $Q_2(m)$ and outputs the add-multiply output signal P(m).

The amplitude adjustment unit 201 in FIG. 15 has the function of adjusting the amplitude of the received signal $R(m)$ to a fixed value or a value within a fixed range and outputting the result of this adjustment as the normalized received signal $A(m)$. The amplitude adjustment unit 201 may be configured to have an automatic gain control function, or a function that employs a bit shift operation to widen or narrow the amplitude.
The received signal delay unit 206 in FIG. 15 has different input and output signals from the received signal delay unit 106 in the first embodiment shown in FIG. 1, but the same configuration may be used as for the received signal delay unit 106 in the first embodiment shown in FIG. 1. Furthermore, the multiply-add operation unit 207 has different input and output signals from the multiply-add operation unit 107 in the first embodiment shown in FIG. 1, but the same configuration may be used as for the multiply-add operation unit 107 in the first embodiment shown in FIG. 1.
Even when amplitude variations occur in a multipath fading environment or a mobile reception environment, the differential demodulator 200 and differential demodulation method according to the second embodiment can stabilize the amplitude of the received signal. With the differential demodulator 200 and differential demodulation method according to the second embodiment, accordingly, a region in which the received signal resides in the phase plane (one of the vertically hatched regions in FIG. 7(a), 9(a), 11(a), or 13(a)) can be identified before demodulation, and the minimal computational procedure necessary for demodulation can be singled out in advance, with the effect that the amounts of circuitry and computation necessary for the differential demodulation process can be reduced.

<3> Third Embodiment

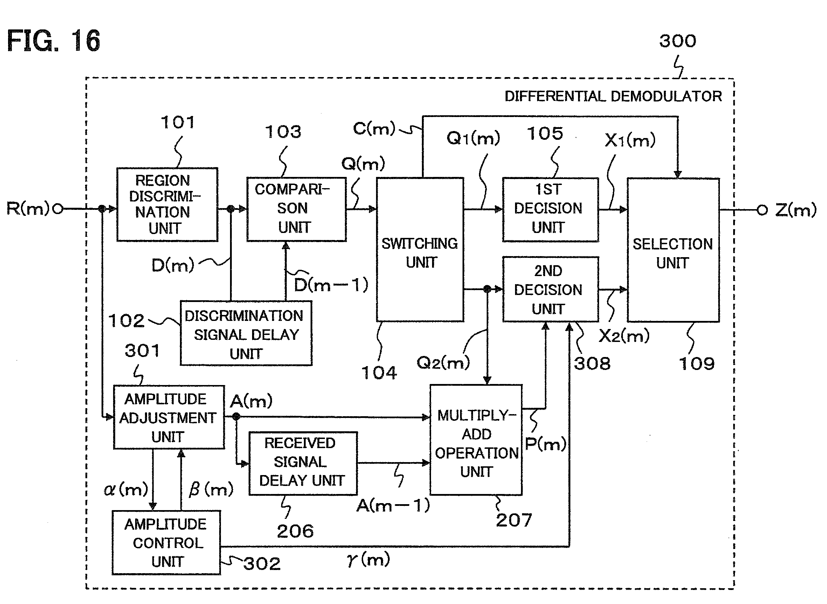

FIG. 16 is a block diagram schematically showing the configuration of a differential demodulator 300 according to a third embodiment of the invention. This differential demodulator 300 is a device capable of carrying out the differential demodulation method according to the third embodiment. Component elements in FIG. 16 that are identical to or correspond to component elements of the differential demodulator 200 according to the second embodiment shown in FIG. 15 have the same reference characters as shown in FIG. 15.
The third embodiment differs from the second embodiment in the following three points, and is identical to the second embodiment in regard to other points.

(1) As a component element not provided in the differential demodulator 200 according to the second embodiment (FIG. 15), the differential demodulator 300 according to the third embodiment has an amplitude control unit 302 that inputs an amplitude information signal $\alpha(m)$ and outputs an amplitude control signal $\beta(m)$ and a threshold value control signal $\gamma(m)$, as shown in FIG. 16.

(2) Whereas the amplitude adjustment unit 201 in the differential demodulator 200 according to the second embodiment (FIG. 15) inputs the received signal $R(m)$ and outputs the normalized received signal $A(m)$, the amplitude adjustment unit 301 in the differential demodulator 300 according to the third embodiment inputs the received signal $R(m)$ and the amplitude control signal $\beta(m)$ and outputs a normalized received signal $A(m)$ and the amplitude information signal $\alpha(m)$.

(3) Whereas the second decision unit 108 in the differential demodulator 200 according to the second embodiment (FIG. 15) inputs the second difference signal $Q_2(m)$ and the add-multiply output signal $P(m)$ and outputs the second decision signal $X_2(m)$, the second decision unit 308 in the differential demodulator 300 according to the third embodiment inputs the second difference signal $Q_2(m)$, the add-multiply output signal $P(m)$, and the threshold value control signal $\gamma(m)$ and outputs the second decision signal $X_2(m)$.

The amplitude adjustment unit 301 in FIG. 16 has the function of carrying out a normalization process that adjusts the amplitude of the received signal $R(m)$ to a fixed value or a value within a fixed range, and outputting the result of this adjustment as the normalized received signal $A(m)$. The amplitude adjustment unit 301 may be configured to have an automatic gain control function, or a function that employs a bit shift operation to widen or narrow the amplitude.

The amplitude adjustment unit 301 can also output information concerning the amplitude of the output normalized received signal $A(m)$ as the amplitude information signal $\alpha(m)$. In using automatic gain control or a bit shift operation to widen or narrow the amplitude, the amplitude adjustment unit 301 may also refer to the amplitude control signal $\beta(m)$. More specifically, the amplitude information signal $\alpha(m)$ and amplitude control signal $\beta(m)$ are preferably control values used in automatic gain control or the number of sign bits used in the bit shift operation.

The amplitude control unit 302 in FIG. 16 has the function of controlling amplitude information on the basis of the amplitude information signal $\alpha(m)$, and outputting the result as the amplitude control signal $\beta(m)$ and the threshold value control signal $\gamma(m)$. As one example, the amplitude information signal $\alpha(m)$ is preferably a control value in automatic gain control; when the control value is the value indicating the maximum permissible amplitude or a value close to that value, a control value that reduces the amplitude can be output as the amplitude control signal $\beta(m)$, and when the control value is the value indicating the minimum permissible amplitude or a value close to that value, a control value that increases the amplitude can be output as the amplitude control signal $\beta(m)$.

As another example, the amplitude information signal $\alpha(m)$ is preferably the number of sign bits in the bit shift operation; when the control value is the value indicating the minimum permissible number of sign bits or a value close to that value, a control value that reduces the amplitude can be output as the amplitude control signal $\beta(m)$, and when the control value is the value indicating the maximum permissible number of sign bits or a value close to that value, a control value that increases the amplitude can be output as the amplitude control signal $\beta(m)$.

The amplitude control unit 302 may also vary the value of the threshold value control signal $\gamma(m)$ according to the magnitude of the amplitude control signal $\beta(m)$. More specifically, when the amplitude control signal $\beta(m)$ is a control value that reduces the amplitude, the amplitude control unit 302 may also reduce the threshold value control signal $y(m)$. When the amplitude control signal $\beta(m)$ is a control value that increases the amplitude, the amplitude control unit 302 may also increase the threshold value control signal $\gamma(m)$.

The second decision unit 308 may also be implemented by replacing the input signals of the second decision unit 108 in FIG. 15 as shown in FIG. 16, and being configured to vary all the threshold values T according to the value of the threshold value control signal $\gamma(m)$. More specifically, the second decision unit 308 is preferably configured to use the value of the threshold value control signal $\gamma(m)$ as a multiplier of all the threshold values T, giving them new values of $\gamma(m)$ x $T$. This is a method of optimizing the number of bits representing the signals by linking the threshold values used for decision purposes in the second decision unit 108 with the adjusted amplitude level (the received signal level after normalization).

In the differential demodulator 300 and differential demodulation method according to the third embodiment, the number of bits used to represent the received signal can be set to an appropriate value or range. With the differential demodulator 300 and differential demodulation method according to the third embodiment, a region in which the received signal resides in the phase plane (one of the vertically hatched regions in FIG. 7(a), 9(a), 11(a), or 13(a)) can be identified before demodulation, and the minimal computational procedure necessary for demodulation can be singled out in advance, with the effect that the amounts of circuitry and computation necessary for the differential demodulation process can be reduced.

<4> Fourth Embodiment

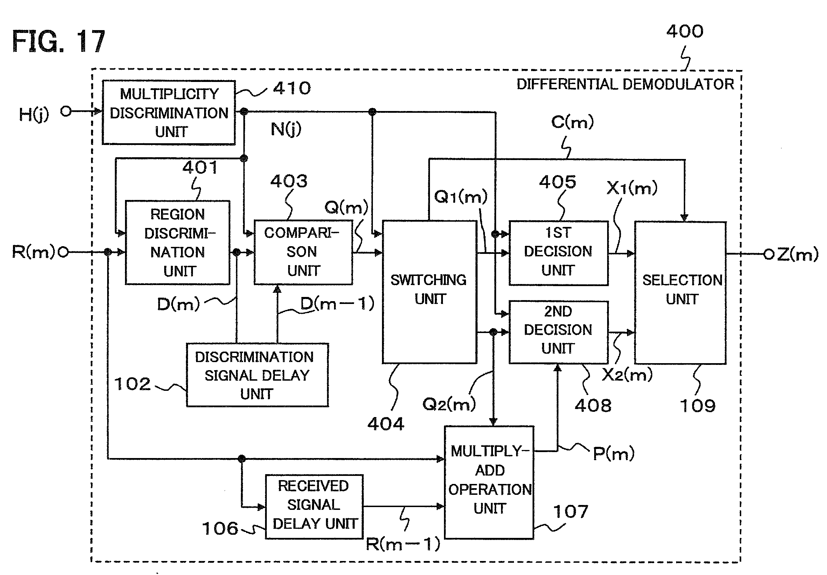

FIG. 17 is a block diagram schematically showing the configuration of a differential demodulator 400 according to a fourth embodiment of the invention. This differential demodulator 400 is a device capable of carrying out the differential demodulation method according to the fourth embodiment. Component elements in FIG. 17 that are identical to or correspond to component elements of the differential demodulator 100 according to the first embodiment shown in FIG. 1 have the same reference characters as shown in FIG. 1.

The fourth embodiment differs from the first embodiment in the following three points, and is identical to the first embodiment in regard to other points.

(1) A format discrimination signal $H(j)$ (where j is an integer) is input to the differential demodulator 400 according to the fourth embodiment. No such format discrimination signal $H(j)$ is input to the differential demodulator 100 according to the first embodiment described above.

(2) The differential demodulator 400 according to the fourth embodiment is provided with a multiplicity discrimination unit 410 that receives input of the format discrimination signal $H(j)$ and outputs a modulation multiplicity signal $N(j)$. No component element for receiving input of a format discrimination signal $H(j)$ is provided in the differential demodulator 100 according to the first embodiment described above.

(3) The modulation multiplicity signal $N(j)$ is input to the region discrimination unit 401, comparison unit 403, switching unit 404, first decision unit 405, and second decision unit 408 in the differential demodulator 400 according to the fourth embodiment. No such modulation multiplicity signal $N(j)$ is input to the region discrimination unit 101, comparison unit 103, switching unit 104, first decision unit 105, and second decision unit 108 in the differential demodulator 100 according to the first embodiment described above.

As shown in FIG. 17, the multiplicity discrimination unit 410 determines the modulation multiplicity of the modulation method applied to the received signal R(m) from the input format discrimination signal $H(j)$, and outputs the result of this determination as the modulation multiplicity signal $N(j)$. More specifically, when the format discrimination signal $H(j)$ is a discrimination signal representing a DQPSK signal, since the constellation of ideal signal points of the modulated signal has four points, the multiplicity discrimination unit 410 may output the modulation multiplicity signal $N(j)$ as '4'. When the format discrimination signal $H(j)$ is itself the modulation multiplicity of the demodulated signal, the multiplicity discrimination unit 410 may output the format discrimination signal $H(j)$ itself as the modulation multiplicity signal $N(j)$.

As shown in FIG. 17, when the region discrimination unit 401, comparison unit 403, switching unit 404, first decision unit 405, and second decision unit 408 make use of the modulation multiplicity in their signal processing, they can refer to the modulation multiplicity signal $N(j)$. More specifically, operations in which the modulation multiplicity $N$ used in the description of the differential demodulator 100 according to the first embodiment is replaced by the modulation multiplicity signal $N(j)$ may be executed in the differential demodulator 400 and differential demodulation method according to the fourth embodiment.

Even if the modulation format of the received signal R(m) changes when the received channel or received service is switched or at other times, the differential demodulator 400 and differential demodulation method according to the fourth embodiment can identify a region in which the received signal resides in the phase plane (one of the vertically hatched regions in FIG. 7(a), 9(a), 11(a), or 13(a)) before demodulation, and single out in advance the minimal computational procedure necessary for demodulation, with the effect that the amounts of circuitry and computation necessary for the differential demodulation process can be reduced.

<5> Fifth Embodiment

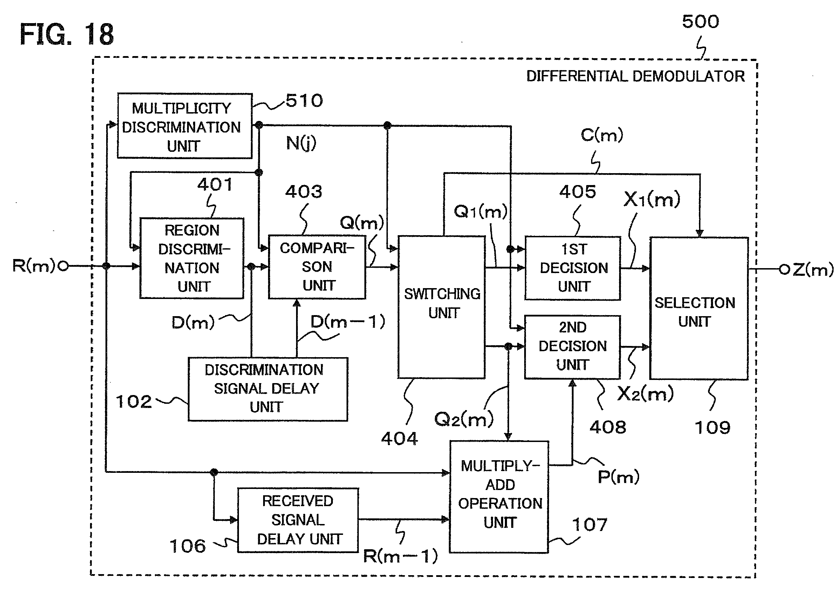

FIG. 18 is a block diagram schematically showing the configuration of a differential demodulator 500 according to a fifth embodiment of the invention. The differential demodulator 500 is a device capable of carrying out the differential demodulation method according to the fifth embodiment. Component elements in FIG. 18 that are identical to or correspond to component elements of the differential demodulator 400 according to the fourth embodiment shown in FIG. 17 have the same reference characters as shown in FIG. 17.

The fifth embodiment differs from the fourth embodiment in the following two points, and is identical to the fourth embodiment in regard to other points.

(1) A format discrimination signal H(j) is input to the differential demodulator 400 according to the fourth embodiment described above, but no format discrimination signal $H(j)$ is input to the differential demodulator 500 according to the fifth embodiment.

(2) Whereas the signal input to the multiplicity discrimination unit 410 in the differential demodulator 400 according to the fourth embodiment is a format discrimination signal $H(j)$, the signal input to the multiplicity discrimination unit 510 in the differential demodulator 500 according to the fifth embodiment is the received signal $R(m)$.

The multiplicity discrimination unit 510 in FIG. 18 determines the modulation multiplicity of the differential phase shift keying modulation method applied to the received signal R(m) and outputs the result of this determination as the modulation multiplicity signal $N(j)$. More specifically, when the received signal $R(m)$ is a DQPSK signal, for example, since there are four points in the constellation of ideal signal points of the modulated signal, the multiplicity discrimination unit 510 can output the modulation multiplicity signal $N(j)$ as '4'. The multiplicity discrimination unit 510 may determine the modulation multiplicity of the differential phase shift keying modulation method applied to the received signal R(m) by, for example, cumulatively summing the received signal $R(m)$ in the phase plane and estimating the number of convergent points obtained as the result of cumulative summation.

Even if the modulation format of the received signal $R(m)$ changes when the received channel or received service is switched or at other times, and the differential demodulator 500 does not receive any external signal it can use to determine the modulation method applied to the received signal $R(m)$, the differential demodulator 500 and differential demodulation method according to the fifth embodiment can identify a region in which the received signal resides in the phase plane (one of the vertically hatched regions in FIG. 7(a), 9(a), 11(a), or 13(a)) before demodulation. The differential demodulator 500 and differential demodulation method according to the fifth embodiment can accordingly single out in advance the minimal computational procedure necessary for demodulation, with the effect that the amounts of circuitry and computation necessary for the differential demodulation process can be reduced.

<6> Variations

The differential demodulators and differential demodulation methods according to the first to fifth embodiments described above illustrate exemplary applications of the present invention, but the invention is not limited to these examples. For example, the invention may be carried out by combining component elements or processes in two or more of the first to fifth embodiments described above. For example, a differential demodulator may be provided with both the amplitude adjustment unit 201 or 301 in the second or third embodiment, and the multiplicity discrimination unit 410 or 510 in the fourth or fifth embodiment.

The differential demodulators and differential demodulation methods according to the first to fifth embodiments have been described above for the case in which the DQPSK format is used as an exemplary differential phase shift keying modulation format, but the present invention can also be applied to devices and methods using differential phase shift keying modulation formats other than the DQPSK format.

The differential demodulators and differential demodulation methods according to the first to fifth embodiments described above can be applied to signal processing circuits or signal processing processes in a digital signal processor (DSP) or various other types of large scale integration (LSI) devices, including devices implemented in a field-programmable gate array (FPGA).

Those skilled in the art will recognize that further variations are possible within the scope of the invention, which is defined in the appended claims.

REFERENCE CHARACTERS

31 1st difference operation unit, 32 2nd difference operation unit, 33 multiplicity storage unit, 34 minimum value selection unit, 71 make-break unit, 72 1st element separation unit, 73 2nd element separation unit, 74 1st multiplication unit, 75 2nd multiplication unit, 76 subtraction unit, 100 differential demodulator, 101 region discrimination unit, 102 discrimination signal delay unit, 103 comparison unit, 104 switching unit, 105 1st decision unit, 106 received signal delay unit, 107 multiply-add operation unit, 108 2nd decision unit, 109 selection unit, 200 differential demodulator, 201 amplitude adjustment unit, 206 received signal delay unit, 207 multiply-add operation unit, 300 differential demodulator, 301 region discrimination unit, 302 amplitude control unit, 308 2nd decision unit, 400 differential demodulator, 410 multiplicity discrimination unit, 401 region discrimination unit, 403 comparison unit, 404 switching unit, 405 1st decision unit, 408 2nd decision unit, 500 differential demodulator, 510 multiplicity discrimination unit.

**Claims**

1. A differential demodulator (100) for demodulating a modulated signal that has been modulated by use of a differential phase shift modulation method, the differential demodulator comprising:

   a region discrimination unit (101) for selecting a residence region, which is a phase region in which a received signal resides in a phase plane, from among a plurality of phase regions divided according to a modulation multiplicity of the modulated signal, and outputting a discrimination signal corresponding to the residence region;

a discrimination signal delay unit (102) for outputting, as a delayed discrimination signal, a signal obtained by temporally delaying the discrimination signal output from the region discrimination unit (101);

a comparison unit (103) for outputting, as a difference signal, a value corresponding to a difference between the discrimination signal output from the region discrimination unit (101) and the delayed discrimination signal output from the discrimination signal delay unit (102);

a switching unit (104) for outputting either the difference signal output from the comparison unit (103) as a first difference signal ($Q_1(m)$), together with a selection signal ($C(m)$) associated with the first difference signal, when the value of the difference signal output from the comparison unit (103) is included in a first set (G1) of difference signals satisfying a predetermined condition, or for outputting the difference signal as a second difference signal ($Q_2(m)$), together with a selection signal ($C(m)$) associated with the second difference signal, when the value of the difference signal output from the comparison unit (103) is included in a second set (G2) of difference signals but not belonging to the first set;

a first decision unit (105) for outputting, when the switching unit (104) outputs the first difference signal ($Q_1(m)$), a first decision signal ($X_1(m)$) corresponding to a magnitude of the first difference signal output from the switching unit (104);

a received signal delay unit (106) for outputting, as a delayed received signal ($R(m-1)$), a signal obtained by temporally delaying the received signal ($R(m)$);

a multiply-add operation unit (107) for performing, when the switching unit (104) outputs the second difference signal ($Q_2(m)$), a multiply-add operation with reference to the received signal ($R(m)$) and the delayed received signal ($R(m-1)$) output from the received signal delay unit (106), and outputting a result of the multiply-add operation as a multiply-add output signal ($P(m)$);

a second decision unit (108) for outputting, when the switching unit (104) outputs the second difference signal ($Q_2(m)$), a second decision signal ($X_2(m)$) corresponding to a magnitude of the second difference signal output from the switching unit (104) and a magnitude of the multiply-add output signal output from the multiply-add operation unit (107); and

a selection unit (109) for selecting a single signal from among the first decision signal and the second decision signal on the basis of the selection signal ($C(m)$) output from the switching unit (104), and outputting the selected single signal as a demodulated signal ($Z(m)$); wherein

the first set (G1) is a set of the difference signals such that a total size of the phase regions in the phase plane corresponding to the difference signals is equal to or less than a phase difference between ideal signal points, in a constellation of ideal signal points of the modulated signal, that are adjacent in the phase plane;

the received signal and the delayed received signal are both complex numbers; and

the multiply-add operation unit (107) performs a multiplication operation on an imaginary part of the received signal and a real part of the delayed received signal, performs a multiplication operation on a real part of the received signal and an imaginary part of the delayed received signal, and performs a subtraction operation on two real numbers to generate the multiply-add output signal.

2. The differential demodulator (200) of claim 1, further comprising an amplitude adjustment unit (201) for normalizing the received signal obtained by controlling an amplitude of the received signal to hold the amplitude at a fixed value or within a fixed range, and for outputting the normalized received signal, wherein:

the delayed received signal output by the received signal delay unit (206) is a signal obtained by temporally delaying the normalized received signal output from the amplitude adjustment unit (201); and

the multiply-add output signal output by the multiply-add operation unit (207) is a signal based on a result of a multiply-add operation performed with reference to the value of the normalized received signal and the value of the normalized delayed received signal.

3. The differential demodulator (400) of claim 1, further comprising a multiplicity discrimination unit (410) for discriminating the modulation multiplicity with reference to information concerning the differential phase shift modulation method, and outputting a value of the modulation multiplicity as a modulation multiplicity signal, wherein:

the region discrimination unit (401) selects the residence region, which is the phase region in which the received signal resides in the phase plane, from among a plurality of phase regions divided according to the modulation multiplicity signal, and outputs the discrimination signal corresponding to the residence region; and

the comparison unit (403) outputs, as the difference signal, a value uniquely determined by the modulation multiplicity signal and the difference between the discrimination signal and the delayed discrimination signal.

**4.** The differential demodulator (500) of claim 1, further comprising a multiplicity discrimination unit (510) for discriminating the modulation multiplicity with reference to the received signal, and outputting a value of the modulation multiplicity as a modulation multiplicity signal, wherein:

the region discrimination unit (401) selects the residence region, which is the phase region in which the received signal resides in the phase plane, from among a plurality of phase regions divided according to the modulation multiplicity signal, and outputs the discrimination signal corresponding to the residence region; and

the comparison unit (403) outputs, as the difference signal, a value uniquely determined according to the modulation multiplicity signal and the difference between the discrimination signal and the delayed discrimination signal.

**5.** The differential demodulator (100) of any one of claims 1 to 4, wherein the plurality of phase regions are regions obtained by division of the phase plane at equal phase intervals, values that increase counterclockwise and are referenced to phase 0 are attached to each of the plurality of phase regions as the discrimination signal, and the comparison unit (103) outputs the difference between the discrimination signal and the delayed discrimination signal as the difference signal.

**6.** The differential demodulator (100) of claim 5, wherein the number of regions in the plurality of phase regions is twice the modulation multiplicity of the modulated signal.

**7.** The differential demodulator (100) of any one of claims 1 to 6, wherein the multiply-add operation unit (107) outputs, as the multiply-add output signal, a value obtained by subtracting a result of multiplying the real part of the received signal by the imaginary part of the delayed received signal from a result of multiplying the imaginary part of the received signal by the real part of the delayed received signal.

**8.** The differential demodulator (100) of any one of claims 1 to 7, wherein:

the first decision unit (105) selects an ideal signal point corresponding to a value of the first decision signal from among the constellation of ideal signal points of the modulated signal, and outputs a value of the selected ideal signal point as the first decision signal; and

the second decision unit (108) selects, from among the constellation of ideal signal points of the modulated signal, an ideal signal point corresponding to a result of a comparison of the value of the second difference signal and the value of the multiply-add output signal with at least one prescribed threshold value, and outputs a value of the selected ideal signal point as the second decision signal.

**9.** The differential demodulator (300) of claim 2, further comprising an amplitude control unit (302) for referring to, as an amplitude information signal, information concerning the amplitude of the normalized received signal, and outputting an amplitude control signal and a threshold control signal, wherein:

the amplitude adjustment unit (301) outputs the amplitude information signal as well as the normalized received signal obtained by using the amplitude control signal to normalize the received signal the amplitude of which has been controlled at the fixed value or within the fixed range; and

the second decision unit (308) selects an ideal signal point corresponding to a result of a comparison of the value of the second difference signal and the value of the multiply-add output signal with at least one prescribed threshold value based on the threshold control signal, from among the constellation of ideal signal points of the modulated signal, and outputs a value of the selected ideal signal point as the second decision signal.

**10.** A differential demodulation method for demodulating a modulated signal that has been modulated by use of a differential phase shift modulation method, the differential demodulation method comprising:

selecting a residence region, which is a phase region in which a received signal resides in a phase plane, from among a plurality of phase regions divided according to a modulation multiplicity of the modulated signal, and generating a discrimination signal corresponding to the residence region;

generating, as a delayed discrimination signal, a signal obtained by temporally delaying the discrimination signal;

generating, as a difference signal, a value corresponding to a difference between the discrimination signal and the delayed discrimination signal;

either outputting the difference signal as a first difference signal ($Q_1(m)$), together with a selection signal ($C(m)$) associated with the first difference signal, when the value of the difference signal is included in a first set (G1) of difference signals satisfying a predetermined condition, or outputting the difference signal as a second difference signal ($Q_2(m)$), together with a selection signal ($C(m)$) associated with the second difference signal, when the value of the difference signal is included in a second set ($G2$) of difference signals output not belonging to the first set;

outputting, when the switching unit (104) outputs the first difference signal ($Q_1(m)$), a first decision signal ($X_1(m)$) corresponding to a magnitude of the first difference signal;

outputting, as a delayed received signal ($R(m-1)$), a signal obtained by temporally delaying the received signal ($R(m)$);

performing, when the switching unit (104) outputs the second difference signal ($Q_2(m)$), a multiply-add operation with reference to the received signal ($R(m)$) and the delayed received signal ($R(m-1)$), and outputting a result of the multiply-add operation as a multiply-add output signal ($P(m)$);

outputting, when the switching unit (104) outputs the second difference signal ($Q_2(m)$), a second decision signal ($X_2(m)$) corresponding to a magnitude of the second difference signal and a magnitude of the multiply-add output signal; and

selecting a single signal from among the first decision signal and the second decision signal on a basis of the selection signal, and outputting the selected single signal as a demodulated signal; wherein

the first set is a set of the difference signals such that a total size of the phase regions in the phase plane corresponding to the difference signals is equal to or less than a phase difference between ideal signal points, in the constellation of ideal signal points of the modulated signal, that are adjacent in the phase plane;

the received signal and the delayed received signal are both complex numbers; and

performing a multiply-add operation further comprises performing a multiplication operation on an imaginary part of the received signal and a real part of the delayed received signal, performing a multiplication operation on a real part of the received signal and an imaginary part of the delayed received signal, and generating the multiply-add output signal by performing a subtraction operation on two real numbers to generate the multiply-add output signal.


**Patentansprüche**

1. Differentieller Demodulator (100) zum Demodulieren eines modulierten Signals, das unter Verwendung eines differentiellen Phasenverschiebungs-Modulationsverfahrens moduliert wurde, wobei der differentielle Demodulator umfasst:

eine Bereichsunterscheidungseinheit (101) zum Auswählen eines Aufenthaltsbereichs, wobei es sich um einen Phasenbereich handelt, in dem sich ein empfangenes Signal in einer Phasenebene aufhält, unter einer Vielzahl von Phasenbereichen, die gemäß einer Modulations-Multiplizität des modulierten Signals unterteilt werden, und zum Ausgeben eines Unterscheidungssignals entsprechend dem Aufenthaltsbereich;

eine Unterscheidungssignal-Verzögerungseinheit (102) zum Ausgeben, als ein verzögertes Unterscheidungssignal, eines Signals, das erhalten wird durch zeitliches Verzögern des Unterscheidungssignals, das von der Bereichsunterscheidungseinheit (101) ausgegeben wird;

eine Vergleichseinheit (103) zum Ausgeben, als ein Differenzsignal, eines Werts entsprechend einer Differenz zwischen dem von der Bereichsunterscheidungseinheit (101) ausgegebenen Unterscheidungssignal und dem von der Unterscheidungssignal-Verzögerungseinheit (102) ausgegebenen verzögerten Unterscheidungssignal;

eine Schalteinheit (104) zum Ausgeben entweder des Differenzsignals, ausgegeben von der Vergleichseinheit (103) als ein erstes Differenzsignal ($Q_1(m)$), zusammen mit einem Auswahlsignal ($C(m)$) assoziiert mit dem ersten Differenzsignal, wenn der Wert des Differenzsignals, das ausgegeben wird von der Vergleichseinheit (103), in einem ersten Satz ($G1$) von Differenzsignalen enthalten ist, die eine vorbestimmte Bedingung erfüllen, oder zum Ausgeben des Differenzsignals als ein zweites Differenzsignal ($Q_2(m)$), zusammen mit einem Auswahlsignal ($C(m)$) assoziiert mit dem zweiten Differenzsignal, wenn der Wert des Differenzsignals, das ausgegeben wird von der Vergleichseinheit (103) in einem zweiten Satz ($G2$) von Differenzsignalen, die nicht zu dem ersten Satz gehören, enthalten ist;

eine erste Entscheidungseinheit (105) zum Ausgeben, wenn die Schalteinheit (104) das erste Differenzsignal ($Q_1(m)$) ausgibt, eines ersten Entscheidungssignals ($X_1(m)$) entsprechend einer Größe des ersten Differenzsignals, das ausgegeben wird von der Schalteinheit (104);

eine Empfangssignal-Verzögerungseinheit (106) zum Ausgeben, als ein verzögertes Empfangssignal ($R(m-1)$), eines Signals, das erhalten wird durch zeitliches Verzögern des empfangenen Signals ($R(m)$);

eine Multiplikations-Additions-Betriebseinheit (107) zum Durchführen, wenn die Schalteinheit (104) das zweite Differenzsignal ($Q_2(m)$) ausgibt, eines Multiplikations-Additions-Betriebs mit Bezug auf das empfangene Signal (R(m)) und des verzögerten Empfangssignals (R(m-1)), ausgegeben von der Empfangssignal-Verzögerungseinheit (106), und zum Ausgeben eines Resultats des Multiplikations-Additions-Betriebs als ein Multiplikations-Additions-Ausgangssignal (P(m));

eine zweite Entscheidungseinheit (108) zum Ausgeben, wenn die Schalteinheit (104) das zweite Differenzsignal ($Q_2$(m)) ausgibt, eines zweiten Entscheidungssignals ($X_2$(m)) entsprechend einer Größe des zweiten Differenzsignals, ausgegeben von der Schalteinheit (104), und einer Größe des Multiplikations-Additions-Ausgangssignals, ausgegeben von der Multiplikations-Additions-Betriebseinheit (107); und

eine Auswahleinheit (109) zum Auswählen eines einzelnen Signals aus dem ersten Entscheidungssignal und dem zweiten Entscheidungssignal auf Grundlage des Auswahlsignals (C(m)), ausgegeben von der Schalteinheit (104), und zum Ausgeben des ausgewählten einzelnen Signals als ein demoduliertes Signal (Z(m)); wobei der erste Satz (G1) ein Satz der Differenzsignale ist, so dass eine totale Größe der Phasenbereiche in der Phasenebene entsprechend den Differenzsignalen gleich zu oder geringer als eine Phasendifferenz zwischen den idealen Signalpunkten ist, in einer Konstellation von idealen Signalpunkten des modulierten Signals, die in der Phasenebene benachbart sind;

wobei das empfangene Signal und das verzögerte empfangene Signal beide komplexe Zahlen sind; und die Multiplikations-Additions-Betriebseinheit (107) einen Multiplikationsbetrieb an einem imaginären Teil des empfangenen Signals und einem realen Teil des verzögerten empfangenen Signals durchführt, einen Multiplikationsbetrieb an einem realen Teil des empfangenen Signals und einem imaginären Teil des verzögerten empfangenen Signals durchführt, und einen Subtraktionsbetrieb an zwei realen Zahlen durchführt, um das Multiplikations-Additions-Ausgangssignal zu erzeugen.

2. Differential-Demodulator (200) nach Anspruch 1, ferner mit einer Amplitudenanpassungseinheit (201) zum Normalisieren des empfangenen Signals, das erhalten wird durch Steuern einer Amplitude des empfangenen Signals, zum Halten der Amplitude auf einem festen Wert oder innerhalb eines festen Bereichs, und zum Ausgeben des normalisierten empfangenen Signals, wobei:

das verzögerte empfangene Signal, ausgegeben durch die Empfangssignal-Verzögerungseinheit (206), ein Signal ist, das erhalten wird durch temporäres Verzögern des normalisierten empfangenen Signals, ausgegeben von der Amplitudenanpassungseinheit (201); und

das Multiplikations-Additions-Ausgangssignal, ausgegeben durch die Multiplikations-Additions-Betriebseinheit (207), ein Signal ist basierend auf einem Resultat eines Multiplikations-Additions-Betriebs, der durchgeführt wird mit Bezug auf den Wert des normalisierten empfangenen Signals und dem Wert des normalisierten verzögerten empfangenen Signals.

3. Differential-Demodulator (400) nach Anspruch 1, ferner mit einer Multiplizitäts-Unterscheidungseinheit (410) zum Unterscheiden der Modulations-Multiplizität mit Bezug auf eine Information betreffend des differentiellen PhasenverschiebungsModulationsverfahrens, und zum Ausgeben eines Werts der Modulations-Multiplizität als ein Modulations-Multiplizitätssignal, wobei:

die Bereichsunterscheidungseinheit (401) den Aufenthaltsbereich auswählt, wobei es sich um den Phasenbereich handelt, in dem sich das empfangene Signal in der Phasenebene aufhält, unter einer Vielzahl von Phasenbereichen, die gemäß dem Modulations-Multiplizitätssignal unterschieden werden, und das Unterscheidungssignal entsprechend dem Aufenthaltsbereich ausgibt; und

die Vergleichseinheit (403), als das Differenzsignal, einen Wert ausgibt, der eindeutig durch das Modulations-Multiplizitätssignal und der Differenz zwischen dem Unterscheidungssignal und dem verzögerten Unterscheidungssignal bestimmt wird.

4. Differential-Demodulator (500) nach Anspruch 1, ferner mit einer Multiplizitäts-Unterscheidungseinheit (510) zum Unterscheiden der Modulations-Multiplizität mit Bezug auf das empfangene Signal, und zum Ausgeben eines Werts der Modulations-Multiplizität als ein Modulations-Multiplizitätssignal, wobei:

die Bereichsunterscheidungseinheit (401) den Aufenthaltsbereich auswählt, wobei es sich um den Phasenbereich handelt, in dem sich das empfangene Signal in der Phasenebene aufhält, unter einer Vielzahl von Phasenbereichen, die gemäß dem Modulations-Multiplizitätssignal unterschieden werden, und das Unterscheidungssignal entsprechend dem Aufenthaltsbereich ausgibt; und

die Vergleichseinheit (403), als das Differenzsignal, einen Wert ausgibt, der eindeutig gemäß dem Modulations-Multiplizitätssignal und der Differenz zwischen dem Unterscheidungssignal und dem verzögerten Unterscheidungssignal bestimmt ist.

**5.** Differential-Demodulator (100) nach einem der Ansprüche 1-4, wobei die Vielzahl von Phasenbereichen Bereiche sind, die erhalten werden durch Unterteilen der Phasenebene bei gleichen Phasenintervallen, wobei Werte, die entgegen dem Uhrzeigersinn anwachsen und auf eine Phase 0 Bezug nehmen, zu jedem der Vielzahl von Phasenbereiche als das Unterscheidungssignal hinzugefügt sind, und die Vergleichseinheit (103) die Differenz zwischen dem Unterscheidungssignal und dem verzögerten Unterscheidungssignal als das Differenzsignal ausgibt.

**6.** Differential-Demodulator (100) nach Anspruch 5, wobei die Anzahl von Bereichen in der Vielzahl von Phasenbereichen zwei Mal die Modulations-Multiplizität des modulierten Signals ist.

**7.** Differential-Demodulator (100) nach einem der Ansprüche 1-6, wobei die Multiplikations-Additions-Betriebseinheit (107) als das Multiplikations-Additions-Ausgangssignal einen Wert ausgibt, der erhalten wird durch Subtrahieren eines Resultats einer Multiplikation des realen Teils des empfangenen Signals mit dem imaginären Teil des verzögerten empfangenen Signals von einem Resultat einer Multiplikation des imaginären Teils des empfangenen Signals mit dem realen Teil des verzögerten empfangenen Signals.

**8.** Differential-Demodulator (100) nach einem der Ansprüche 1-7, wobei:

die erste Entscheidungseinheit (105) einen idealen Signalpunkt entsprechend einem Wert des ersten Entscheidungssignals unter der Konstellation von idealen Signalpunkten des modulierten Signals auswählt, und einen Wert des ausgewählten idealen Signalpunkts als das erste Entscheidungssignal ausgibt; und
die zweite Entscheidungseinheit (108), unter der Konstellation von idealen Signalpunkten des modulierten Signals, einen idealen Signalpunkt entsprechend einem Resultat eines Vergleichs des Werts des zweiten Differenzsignals und dem Wert des Multiplikations-Additions-Ausgangssignals mit zumindest einem vorgegebenen Schwellenwert auswählt, und einen Wert des ausgewählten idealen Signalpunkts als das zweite Entscheidungssignal ausgibt.

**9.** Differential-Demodulator (300) nach Anspruch 2, ferner mit einer Amplitudensteuereinheit (302) zum Bezugnehmen auf, als ein Amplitudeninformationssignal, eine Information betreffend die Amplitude des normalisierten empfangenen Signals, und zum Ausgeben eines Amplitudensteuersignals und eines Schwellenwertsteuersignals, wobei:

die Amplitudenanpassungseinheit (301) das Amplitudeninformationssignal sowie das normalisierte empfangene Signal, erhalten unter Verwendung des Amplitudensteuersignals zum Normalisieren des empfangenen Signals, dessen Amplitude bei dem festen Wert oder innerhalb des festen Bereichs gesteuert wurde, ausgibt; und
die zweite Entscheidungseinheit (308) einen idealen Signalpunkt entsprechend einem Resultat eines Vergleichs des Werts des zweiten Differenzsignals und dem Wert des Multiplikations-Additions-Ausgangssignals mit zumindest einem vorgegebenen Schwellenwert basierend auf dem Schwellenwertsteuersignal auswählt, unter der Konstellation von idealen Signalpunkten des modulierten Signals, und einen Wert des ausgewählten idealen Signalpunkts als das zweite Entscheidungssignal ausgibt.

**10.** Differential-Demodulationsverfahren zum Demodulieren eines modulierten Signals, das unter Verwendung eines differentiellen Phasenverschiebungsmodulationsverfahrens moduliert wurde, wobei das Differential-Demodulationsverfahren umfasst:

Auswählen eines Aufenthaltsbereichs, wobei es sich um einen Phasenbereich handelt, in dem sich ein empfangenes Signal in einer Phasenebene aufhält, unter einer Vielzahl von Phasenbereichen, die unterteilt werden gemäß einer Modulations-Multiplizität des modulierten Signals, und Erzeugen eines Entscheidungssignals entsprechend dem Aufenthaltsbereich;
Erzeugen, als ein verzögertes Unterscheidungssignal, eines Signals, das erhalten wird durch temporäres Verzögern des Unterscheidungssignals;
Erzeugen, als ein Differenzsignal, eines Werts entsprechend einer Differenz zwischen dem Unterscheidungssignal und dem verzögerten Unterscheidungssignal;
entweder Ausgeben des Differenzsignals als ein erstes Differenzsignal ($Q_1(m)$), zusammen mit einem Auswahlsignal ($C(m)$) assoziiert mit dem ersten Differenzsignal, wenn der Wert des Differenzsignals in einem ersten Satz (G1) von Differenzsignalen enthalten ist, die eine vorbestimmte Bedingung erfüllen, oder Ausgeben des Differenzsignals als ein zweites Differenzsignal ($Q_2(m)$), zusammen mit einem Auswahlsignal ($C(m)$) assoziiert mit dem zweiten Differenzsignal, wenn der Wert des Differenzsignals in einem zweiten Satz (G2) von Differenzsignalausgaben, die nicht zu dem ersten Satz gehören, enthalten ist;
Ausgeben, wenn die Schalteinheit (104) das erste Differenzsignal ($Q_1(m)$) ausgibt, eines ersten Entscheidungs-

signals (X$_1$(m)) entsprechend einer Größe des ersten Differenzsignals;

Ausgeben, als ein verzögertes empfangenes Signal (R(m-1)), eines Signals, das erhalten wird durch temporäres Verzögern des empfangenen Signals (R(m));

Durchführen, wenn die Schalteinheit (104) das zweite Differenzsignal (Q$_2$(m)) ausgibt, eines Multiplikations-Additions-Betriebs mit Bezug auf das empfangene Signal (R(m)) und des verzögerten empfangenen Signals (R(m-1)), und Ausgeben eines Resultats des Multiplikations-Additions-Betriebs als ein Multiplikations-Additions-Ausgangssignal (P(m));

Ausgeben, wenn die Schalteinheit (104) das zweite Differenzsignal (Q$_2$(m)) ausgibt, eines zweiten Entscheidungssignals (X$_2$(m)) entsprechend einer Größe des zweiten Differenzsignals und einer Größe des Multiplikations-Additions-Ausgangssignals; und

Auswählen eines einzelnen Signals unter dem ersten Entscheidungssignal und dem zweiten Entscheidungssignal auf Grundlage des Auswahlsignals, und Ausgeben des ausgewählten einzelnen Signals als ein demoduliertes Signal; wobei

der erste Satz ein Satz der Differenzsignale ist, so dass eine totale Größe der Phasenbereiche in der Phasenebene entsprechend den Differenzsignalen gleich zu oder geringer als eine Phasendifferenz zwischen idealen Signalpunkten ist, in der Konstellation idealer Signalpunkte des modulierten Signals, die in der Phasenebene benachbart sind;

das empfangene Signal und das verzögerte empfangene Signal beide komplexe Zahlen sind; und

Durchführen eines Multiplikations-Additions-Betriebs ferner ein Durchführen eines Multiplikations-Betriebs an einem imaginären Teil des empfangenen Signals und einem realen Teil des verzögerten empfangenen Signals umfasst, Durchführen eines Multiplikations-Betriebs an einem realen Teil des empfangenen Signals und einem imaginären Teil des verzögerten empfangenen Signals, und Erzeugen des Multiplikations-Additions-Ausgangssignals durch Durchführen eines Subtraktionsbetriebs an zwei realen Zahlen zum Erzeugen des Multiplikations-Additions-Ausgangssignals.

**Revendications**

1. Démodulateur différentiel (100) destiné à démoduler un signal modulé qui a été modulé par l'utilisation d'un procédé de modulation différentielle par déplacement de phase, le démodulateur différentiel comprenant :

une unité de discrimination de région (101) destinée à sélectionner une région de résidence, qui correspond à une région de phase dans laquelle un signal reçu réside dans un plan de phase, parmi une pluralité de régions de phase divisée selon une multiplicité de modulations du signal modulé, et à émettre un signal de discrimination correspondant à la région de résidence ;

une unité de temporisation de signal de discrimination (102) destinée à émettre, sous forme de signal de discrimination retardé, un signal obtenu en retardant dans le temps le signal de discrimination émis depuis l'unité de discrimination de région (101) ;

une unité de comparaison (103) destinée à émettre, sous forme de signal de différence, une valeur correspondant à une différence entre le signal de discrimination émis depuis l'unité de discrimination de région (101) et le signal de discrimination retardé émis depuis l'unité de temporisation de signal de discrimination (102) ;

une unité de commutation (104) destinée à émettre le signal de différence émis depuis l'unité de comparaison (103) sous forme d'un premier signal de différence (Q$_1$(m)), avec un signal de sélection (C(m)) associé au premier signal de différence, lorsque la valeur du signal de différence émis depuis l'unité de comparaison (103) est incluse dans un premier ensemble (G1) de signaux de différence respectant une condition prédéterminée, ou destinée à émettre le signal de différence sous forme d'un second signal de différence (Q$_2$(m)), avec un signal de sélection (C(m)) associé au second signal de différence, lorsque la valeur du signal de différence émis depuis l'unité de comparaison (103) est incluse dans un second ensemble (G2) de signaux de différence, mais n'appartenant pas au premier ensemble ;

une première unité de décision (105) destinée à émettre, lorsque l'unité de commutation (104) émet le premier signal de différence (Q$_1$(m)), un premier signal de décision (X$_1$(m)) correspondant à une amplitude du premier signal de différence émis depuis l'unité de commutation (104) ;

une unité de temporisation de signal reçu (106) destinée à émettre, sous forme d'un signal reçu retardé (R(m-1)), un signal obtenu en retardant dans le temps le signal reçu (R(m)) ;

une unité d'opération de multiplication-addition (107) destinée à réaliser, lorsque l'unité de commutation (104) émet le second signal de différence (Q$_2$(m)), une opération de multiplication-addition en référence au signal reçu (R(m)) et au signal reçu retardé (R(m-1)) émis depuis l'unité de temporisation de signal reçu (106), et à émettre un résultat de l'opération de multiplication-addition sous forme de signal de résultat de multiplication-addition (P(m)) ;
une seconde unité de décision (108) destinée à émettre, lorsque l'unité de commutation (104) émet le second signal de différence ($Q_2(m)$), un second signal de décision ($X_2(m)$) correspondant à une amplitude du second signal de différence émis depuis l'unité de commutation (104) et à une amplitude du signal de résultat de multiplication-addition émis depuis l'unité d'opération de multiplication-addition (107) ; et
une unité de sélection (109) destinée à sélectionner un signal unique parmi le premier signal de décision et le second signal de décision sur la base du signal de sélection (C(m)) émis depuis l'unité de commutation (104), et à émettre le signal unique sélectionné sous forme de signal démodulé (Z(m)) ; dans lequel le premier ensemble (G1) est un ensemble de signaux de différence tel qu'une taille totale des régions de phase dans le plan de phase correspondant aux signaux de différence soit inférieure ou égale à une différence de phase entre des points de signal idéal, dans une constellation de points de signal idéal du signal modulé, qui sont adjacents dans le plan de phase ;
le signal reçu et le signal reçu retardé sont des nombres complexes ; et
l'unité d'opération de multiplication-addition (107) réalise une opération de multiplication sur une partie imaginaire du signal reçu et une partie réelle du signal reçu retardé, réalise une opération de multiplication sur une partie réelle du signal reçu et une partie imaginaire du signal reçu retardé, et réalise une opération de soustraction sur deux nombres réels pour générer le signal de résultat de multiplication-addition.

2. Démodulateur différentiel (200) selon la revendication 1, comprenant en outre une unité d'ajustement d'amplitude (201) destinée à normaliser le signal reçu obtenu en contrôlant une amplitude du signal reçu pour maintenir l'amplitude au niveau d'une valeur fixe ou dans une plage fixe, et à émettre le signal reçu normalisé, dans lequel :

le signal reçu retardé émis par l'unité de temporisation de signal reçu (206) est un signal obtenu en retardant dans le temps le signal reçu normalisé émis depuis l'unité d'ajustement d'amplitude (201) ; et
le signal de résultat de multiplication-addition émis par l'unité d'opération de multiplication-addition (207) est un signal basé sur un résultat d'une opération de multiplication-addition effectuée en référence à la valeur du signal reçu normalisé et à la valeur du signal reçu retardé normalisé.

3. Démodulateur différentiel (400) selon la revendication 1, comprenant en outre une unité de discrimination de multiplicité (410) destinée à discriminer la multiplicité de modulations en référence aux informations concernant le procédé de modulation différentielle par déplacement de phase, et à émettre une valeur de la multiplicité de modulations sous forme de signal de multiplicité de modulations, dans lequel :

l'unité de discrimination de région (401) sélectionne la région de résidence, qui est la région de phase dans laquelle le signal reçu réside dans le plan de phase, parmi une pluralité de régions de phase divisée selon le signal de multiplicité de modulations, et émet le signal de discrimination correspondant à la région de résidence ; et
l'unité de comparaison (403) émet, sous forme de signal de différence, une valeur déterminée uniquement par le signal de multiplicité de modulations et par la différence entre le signal de discrimination et le signal de discrimination retardé.

4. Démodulateur différentiel (500) selon la revendication 1, comprenant en outre une unité de discrimination de multiplicité (510) destinée à discriminer la multiplicité de modulations en référence au signal reçu, et à émettre une valeur de la multiplicité de modulations sous forme de signal de multiplicité de modulations, dans lequel :

l'unité de discrimination de région (401) sélectionne la région de résidence, qui est la région de phase dans laquelle le signal reçu réside dans le plan de phase, parmi une pluralité de régions de phase divisée selon le signal de multiplicité de modulations, et émet le signal de discrimination correspondant à la région de résidence ; et
l'unité de comparaison (403) émet, sous la forme du signal de différence, une valeur déterminée uniquement par le signal de multiplicité de modulations et par la différence entre le signal de discrimination et le signal de discrimination retardé.

5. Démodulateur différentiel (100) selon l'une quelconque des revendications 1 à 4, dans lequel la pluralité de régions de phase sont des régions obtenues par division du plan de phase à des intervalles de phase égaux, les valeurs qui augmentent dans le sens anti-horaire et font référence à la phase 0 étant fixées à chacune des régions de la pluralité de régions de phase sous la forme du signal de discrimination, et l'unité de comparaison (103) émet la différence entre le signal de discrimination et le signal de discrimination retardé sous la forme du signal de différence.

**6.** Démodulateur différentiel (100) selon la revendication 5, dans lequel le nombre de régions dans la pluralité de régions de phase est le double de la multiplicité de modulations du signal modulé.

**7.** Démodulateur différentiel (100) selon l'une quelconque des revendications 1 à 6, dans lequel l'unité d'opération de multiplication-addition (107) émet, sous la forme du signal de résultat de multiplication-addition, une valeur obtenue en soustrayant un résultat d'une multiplication de la partie réelle du signal reçu par la partie imaginaire du signal reçu retardé d'un résultat de la multiplication de la partie imaginaire du signal reçu par la partie réelle du signal reçu retardé.

**8.** Démodulateur différentiel (100) selon l'une quelconque des revendications 1 à 7, dans lequel :

la première unité de décision (105) sélectionne un point de signal idéal correspondant à une valeur du premier signal de décision parmi la constellation de points de signal idéal du signal modulé, et émet une valeur du point de signal idéal sélectionné sous la forme du premier signal de décision ; et
la seconde unité de décision (108) sélectionne, parmi la constellation des points de signal idéal du signal modulé, un point de signal idéal correspondant à un résultat d'une comparaison de la valeur du second signal de différence et de la valeur du signal de résultat de multiplication-addition avec au moins une valeur seuil prescrite, et émet une valeur du point de signal idéal sélectionné sous la forme du second signal de décision.

**9.** Démodulateur différentiel (300) selon la revendication 2, comprenant en outre une unité de contrôle d'amplitude (302) destinée à faire référence à, sous forme de signal d'information d'amplitude, des informations concernant l'amplitude du signal reçu normalisé, et à émettre un signal de contrôle d'amplitude et un signal de contrôle de seuil, dans lequel :

l'unité d'ajustement d'amplitude (301) émet le signal d'information d'amplitude, ainsi que le signal reçu normalisé obtenu en utilisant le signal de contrôle d'amplitude pour normaliser le signal reçu dont l'amplitude a été contrôlée au niveau de la valeur fixe ou dans la plage fixe ; et
la seconde unité de décision (308) sélectionne un point de signal idéal correspondant à un résultat d'une comparaison de la valeur du second signal de différence et de la valeur du signal de résultat de multiplication-addition avec au moins une valeur seuil prescrite sur la base du signal de contrôle de seuil, parmi la constellation de points de signal idéal du signal modulé, et émet une valeur du point de signal idéal sélectionné sous la forme du second signal de décision.

**10.** Procédé de démodulation différentielle destiné à démoduler un signal modulé qui a été modulé en utilisant un procédé de modulation différentielle par déplacement de phase, le procédé de démodulation différentielle comprenant :

la sélection d'une région de résidence, qui est une région de phase dans laquelle un signal reçu réside dans un plan de phase, parmi une pluralité de régions de phase divisée selon une multiplicité de modulations du signal modulé, et la génération d'un signal de discrimination correspondant à la région de résidence ;
la génération, sous forme de signal de discrimination retardé, d'un signal obtenu en retardant dans le temps le signal de discrimination ;
la génération, sous forme de signal de différence, d'une valeur correspondant à une différence entre le signal de discrimination et le signal de discrimination retardé ;
l'émission du signal de différence sous forme de premier signal de différence ($Q_1(m)$), avec un signal de sélection ($C(m)$) associé au premier signal de différence, lorsque la valeur du signal de différence est incluse dans un premier ensemble (G1) de signaux de différence respectant une condition prédéterminée, ou l'émission du signal de différence sous forme de second signal de différence ($Q_2(m)$), avec un signal de sélection ($C(m)$) associé au second signal de différence, lorsque la valeur du signal de différence est incluse dans un second ensemble (G2) de signaux de différence émis mais n'appartenant pas au premier ensemble ;
l'émission, lorsque l'unité de commutation (104) émet le premier signal de différence ($Q_1(m)$), d'un premier signal de décision ($X_1(m)$) correspondant à une amplitude du premier signal de différence ;
l'émission, sous forme de signal reçu retardé ($R(m-1)$), d'un signal obtenu en retardant dans le temps le signal reçu ($R(m)$) ;
la réalisation, lorsque l'unité de commutation (104) émet le second signal de différence ($Q_2(m)$), d'une opération de multiplication-addition en référence au signal reçu ($R(m)$) et au signal reçu retardé ($R(m-1)$), et l'émission d'un résultat de l'opération de multiplication-addition sous forme de signal de résultat de multiplication-addition ($P(m)$) ;

l'émission, lorsque l'unité de commutation (104) émet le second signal de différence ($Q_2(m)$), d'un second signal de décision ($X_2(m)$) correspondant à une amplitude du second signal de différence et à une amplitude du signal de résultat de multiplication-addition ; et

la sélection d'un signal unique parmi le premier signal de décision et le second signal de décision sur une base du signal de sélection, et l'émission du signal unique sélectionné sous forme de signal démodulé ; dans lequel le premier ensemble est un ensemble de signaux de différence tel qu'une taille totale des régions de phase dans le plan de phase correspondant aux signaux de différence soit inférieure ou égale à une différence de phase entre des points de signal idéal, dans la constellation de points de signal idéal du signal modulé, qui sont adjacents dans le plan de phase ;

le signal reçu et le signal reçu retardé sont des nombres complexes; et

la réalisation d'une opération de multiplication-addition comprend en outre la réalisation d'une opération de multiplication sur une partie imaginaire du signal reçu et une partie réelle du signal reçu retardé, la réalisation d'une opération de multiplication sur une partie réelle du signal reçu et une partie imaginaire du signal reçu retardé, et la génération du signal de résultat de multiplication-addition en réalisant une opération de soustraction sur deux nombres réels pour générer le signal de résultat de multiplication-addition.

FIG. 1

FIG. 2

FIG. 3

# FIG. 4

# FIG. 5

## FIG. 6

| Q(m) | PHASE RANGE W OF CANDIDATE PHASE DIFFERENCES BETWEEN RECEIVED SIGNAL R(m) AND DELAYED RECEIVED SIGNAL R(m-1) (WITH IDENTICAL SIGNS) | | OUTPUT OF SWITCHING UNIT 104 O: SELECTED AS C(m) ×: NOT SELECTED AS C(m) | | |
|---|---|---|---|---|---|
| | | | $Q_1(m)$ | $Q_2(m)$ | $C(m)$ |
| 0 | $\pi/2$ | $(-\pi/4 \sim +\pi/4)$ | O | × | O |
| 1 | $\pi$ | $(-\pi/2 \sim +\pi/2)$ | × | O | O |
| 2 | $\pi$ | $(\pm\pi/4 \sim \pm3\pi/4)$ | × | O | O |
| 3 | $\pi$ | $(\pm\pi/2 \sim \pm\pi)$ | × | O | O |
| 4 | $\pi/2$ | $(+\pi3/4 \sim +5\pi/4)$ | O | × | O |

# FIG. 8

EP 2 930 897 B1

FIG. 9(a)

FIG. 9(b)

IDEAL SIGNAL
POINT

## FIG. 10

PHASE DIFFERENCE BETWEEN R(m) AND R(m−1)

FIG. 11(a)

FIG. 11(b)

FIG. 12

PHASE DIFFERENCE BETWEEN R(m) AND R(m-1)

# FIG. 13(a)

# FIG. 13(b)

IDEAL SIGNAL
POINT

EP 2 930 897 B1

FIG. 14

PHASE DIFFERENCE BETWEEN R(m) AND R(m−1)

# FIG. 15

EP 2 930 897 B1

# FIG. 16

# FIG. 17

EP 2 930 897 B1

## FIG. 18

EP 2 930 897 B1

**EP 2 930 897 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9233138 B
- JP 2004364131 A
- EP 2709329 A